# EUROPEAN PATENT APPLICATION

(11) **EP 1 217 510 A2**
(43) Date of publication of application: **26.06.2002**
(21) Application number: 01310236.3
(22) Date of filing: 07.12.2001
(51) Int. Cl.: G06F 3/12

(54) **Printing system**

(30) Priority: 22.12.2000 JP 2000391695
(71) Applicant: ALPS ELECTRIC CO., LTD., Ota-ku Tokyo 145 (JP)
(72) Inventor: Miyazaki, Masanori, c/o Alps Electric Co., Ltd., Ota-ku, Tokyo (JP)
(74) Representative: Kensett, John Hinton

(57) **Abstract**

A printing system allows only a particular user, who is authenticated as an authorized user, to receive particular information restricted in terms of distribution. The printing system includes a server (20), a portable terminal (T1, T2) for receiving information transmitted from the server, and a printer connected to the portable terminal. The server includes storage means (40) for storing display-information to be displayed on a display (42) provided on the portable terminal and print-information including information that is more detailed than corresponding display-information. The portable terminal includes displaying means for displaying the display-information stored in the server on the display and printing means for printing the print-information by the printer.

## Description

### BACKGROUND OF THE INVENTION

### 1. Field of the Invention

The present invention relates to a printing system, and more particularly, to a printing system that can be advantageously used to print various kinds of information distributed via a network such as the Internet.

### 2. Description of the Related Art

In recent years, a communication environment using a network such as the Internet has become very popular, and such a communication environment is now widely used not only in universities and particular companies but also in homes. Various kinds of information are provided to individuals via such a communication environment. Furthermore, in recent years, a function has been added to a PHS (Personal Handyphone System) or a portable telephone (hereinafter, PHS's, portable telephones and similar devices will be generically denoted by a portable telephone) so that a portable telephone also serves as a portable information terminal. This makes it possible to use a portable telephone to receive various kinds of information via a network.

In the case where various kinds of information are provided to a portable telephone, it is possible to identify the portable telephone by its caller number. Furthermore, it is also possible to identify a user by a password or the like. Thus, it is possible to restrict the distribution of information (content) so that only a particular user can receive the information.

The addition of the network connection capability to portable telephones has resulted in a drastic increase in popularity of portable telephones. As a result, an increasingly large amount of information in a format specialized for portable telephones is now distributed via a network. It is very important that portable telephones are small in size and light in weight. To achieve this requirement, the capabilities of portable telephones are limited. More specifically, portable telephones are low in processing speed and in capacity of memory space compared with a typical home-use personal computer and thus portable telephones have limitations in terms of installed software. Furthermore, the size of a display is limited to a few inches.

As a result, information including transmission character information and image information in the format dedicated to use by a portable telephone is limited in size. That is, the transmission character information may include characters whose number is equal to or smaller than a predetermined value, and the size of the image information is limited to one page displayed on the screen of the display device. In contrast to the conventional portable telephone capable of transmitting and receiving only speech information, the state-of-the art portable telephone has the capability of transmitting and receiving not only speech information but also other various kinds of information such as character information, image information, and music information. However, the portable telephone still has various restrictions.

Because of the above-described restrictions of the portable telephone, information displayed on the screen is limited. For example, map information produced as image information for being displayed on a portable telephone has low resolution because the data size is limited. As a result, a map displayed on the screen becomes low in resolution. Even if a portable telephone were capable of receiving high-resolution map information with a large data size, a map displayed on its screen would be low in resolution because of the low resolution of the display. Thus, even in this case, a high-resolution map cannot be displayed.

When information received by a portable telephone via a network is displayed on its display, one page of information is received and displayed on the screen, and the content of the information displayed is scrolled in response on an operation performed by a user of the portable telephone. In the case where the information includes character information and image information, only character information is first displayed on the screen. After the whole character information has been displayed via scrolling performed in response to the operation of the user of the portable telephone, image information is displayed. Some portable telephones also have the capability of scrolling information in a reverse direction. If a portable telephone does not have such a capability, it is required to again receive the same information when it is required to again display the same information on the screen as the already-displayed information.

In recent years, a printer has been developed that can be connected to a portable telephone to print various kinds of received information on paper with a small fixed size such as B8-size. Although information received by a portable telephone via a network can be displayed on the screen of the portable telephone, it will be useful to print the information on paper. Four main advantages obtained by printing information on paper are described below.
(1) The resolution of a printer can be much higher than that of a display of a portable telephone. Therefore, detailed information, which cannot be displayed on the display of the portable telephone, can be printed.
(2) Once map information received via a network has been printed, the printed map can be used instead of the map displayed on the screen of the portable telephone, and thus one can visit a desired place in accordance with the printed map without having to maintain the portable telephone in the on-state to display the map. This prevents the battery of the portable telephone from being wasted.
(3) It is possible to group various kinds of information in accordance with the genre by printing a particular genre of information on small-sized paper.
(4) In the case where information is not printed, in order to again display information that was displayed in the past, it is necessary to specify a site and receive the information from the specified site. Therefore, one has to remember the site. In contrast, if information is printed, it becomes unnecessary to again receive the information and thus it becomes unnecessary for one to remember the site.

However, as described earlier, the information format for use by portable telephones is restricted in many respects, and information represented in the portable-telephone format has a low resolution. The advantage (1) described above cannot be achieved when information with such low resolution is printed. Although it is possible to directly print the information displayed on the display of the portable telephone, the print area will exceed the size of the predetermined size of paper. As a result, the advantage (3) cannot be achieved.

There is a need for making it possible for one to make a reservation, an application, a payment, a reception, or the like without having to visit an agent or a shop, by providing information (content), which is restricted in terms of distribution, to one who is authenticated as an authorized user on the basis of a caller number of a password, thereby providing a great convenient to the user.

There is also a need for easily obtaining a printed matter related to information received via a network. For example, when music information is received via the network, the user may wish to obtain a seal having a printed image similar to that formed on a case or a jacket of a medium.

### SUMMARY OF THE INVENTION

In view of the above, an object of the present invention is to provide a printing system capable of printing details of various kinds of information received via a network on small-sized paper.

More specific objects of the present invention are described below.
(A) A specific object is to provide a printing system capable of printing details of various kinds of information received via a network on small-sized paper.
(B) Another specific object is to provide a printing system capable of printing a particular kind of information received via a network on small-sized paper.
(C) Another specific object is to provide a printing system capable of printing information received via a network on paper in a particular form.
(D) Another specific object is to provide a printing system capable of printing print-information received via a network on small-sized paper.

According to an aspect of the present invention, to achieve the above objects, there is provided a printing system comprising a server apparatus, a portable terminal for receiving information transmitted from the server apparatus, and a printer connected to the portable terminal, for printing on specified paper, wherein the server apparatus includes storage means for storing display-information to be displayed on a display of the portable terminal and print-information, to be printed on the specified paper, including information that is more detailed than corresponding display-information, and wherein the portable terminal includes display means for displaying the display-information stored in the server apparatus and printing means for printing the print-information by the printer.

According to another aspect of the present invention, there is provided a printing system comprising a server apparatus; a portable terminal for receiving information transmitted from the server apparatus; and a printer connected to the portable terminal, for printing on specified paper, wherein the server apparatus has a capability of converting a format of general information provided via a network into a specialized format adapted to print-information to be printed by the printer, and wherein the portable terminal includes printing means for printing, by the printer, the print-information in the specialized format received from the server apparatus.

In the present invention, the print-information is preferably stored, in a compressed form specially adapted to the print-information, in the storage means.

In the present invention, the print-information may include information described in a specialized script language.

In the present invention, the print-information corresponds to the display-information, and the printing means includes selection means for selecting print-information, to be printed by the printer, from print-information stored in the storage means.

In the present invention, the display-information may be outline-information indicating an outline of the print-information, and the printing means may include designation means for designating at least one piece of print-information to be printed by the printer, on the basis of outline information displayed on the display, and the printing means may print the printing-information designated by the designation means on the basis of the outline information, using the printer.

In the present invention, the storage means may store information indicating a predetermined size of the specified paper and also may store arrangement information indicating the arrangement of the printing-information to be printed on the specified paper, and the printing means may arrange, in accordance with the arrangement information, the print-information designated by the designation means on the basis of the outline information.

In the present invention, the server apparatus may include authentication means storing authentication information for identifying a pre-registered caller, and the server apparatus may identify a caller by retrieving the authentication information in response to a request issued by the portable terminal, and only when the authentication of the caller on the basis of the authentication information has been successfully passed, the server apparatus may transmit the print-information from the storage means to the portable terminal.

In the present invention, the print-information may include an authentication mark indicating that a caller is an authorized user.

In the present invention, the authentication mark may be encrypted alphanumeric information described in the form of a two-dimensional or a one-dimensional bar code.

In the present invention, the authentication means may store a count associated with the pre-registered caller, and the count may be increased or reduced in response to a request issued by the caller, print-information corresponding to the count may be transmitted to the portable terminal, and the resultant increased or reduced count may be stored in the authentication means.

In the present invention, the authentication means may increase or reduce the count in response to a request issued by another pre-registered caller and may store the resultant increased or reduced count.

In the present invention, the authentication means may include payment confirmation means for confirming that a pre-registered caller has made a payment, and, in response to permission information indicating that the payment confirmation means has confirmed that the payment has made, the storage means may transmit the print-information to the portable terminal.

In the present invention, the authentication means may include request confirmation means for confirming that a pre-registered caller has issued a predetermined particular request, and, in response to permission information indicating that the request confirmation means has confirmed that the request has been issued, the storage means may transmit the print-information to the portable terminal.

In the present invention, the display-information may be music/video content information.

In the present invention, the paper may be a storage medium label and the print-information may be storage medium label data.

In the present invention, the storage medium may be one of a magnetooptical disk such as a MO or mini disc (usually called a MD (registered trade mark)), a memory card such as a memory stick (registered trade mark), a video tape, an audio tape, and an optical disk such as a digital versatile disk (usually called a DVD (registered trade mark)).

In the present invention, the music/video content information may be one of an artist name, a title of music, a title of an album, and a playback time.

In the present invention, the print-information may be words-of-song card information.

In the present invention, the display-information may be magazine article outline information, and the print-information may be a whole magazine article.

In the present invention, the print-information may be a novel to be transmitted, and the display-information may be a title and an author name.

According to another aspect of the present invention, there is provided a printing system comprising a server apparatus, a portable terminal for receiving information transmitted from the server apparatus, and a printer connected to the portable terminal, for printing on specified paper, wherein the server apparatus includes storage means for storing display-information to be displayed on a display of the portable terminal and print-information, to be printed on the specified paper, including information that is more detailed than corresponding display-information, and wherein the portable terminal includes display means for displaying the display-information stored in the server apparatus and printing means for printing the print-information by the printer. Thus, in this printing system in which the server apparatus stores both display-information to be displayed on the display of the portable terminal and print-information including information that is more detailed than corresponding display-information, printing is performed on specified paper not in accordance with the display-information for being displayed on the display of the portable terminal but in accordance with the print-information that is adapted to the size of the specified paper and that includes information that is more detailed than corresponding display-information, thereby allowing the detailed information to be printed within the size of the specified paper.

According to still another aspect of the present invention, there is provided a printing system comprising a server apparatus, a portable terminal for receiving information transmitted from the server apparatus, and a printer connected to the portable terminal, for printing on specified paper, wherein the server apparatus has a capability of converting a format of general information provided via a network into a specialized format adapted to print-information to be printed by the printer, and wherein the portable terminal includes printing means for printing, by the printer, the print-information in the specialized format received from the server apparatus. That is, information to be used as print-information including detailed information is stored in the server apparatus, and, when printing is performed on specified paper, print-information is produced, in response to a transmission request issued by a portable terminal, into a format that matches with the size of the specified paper. Unlike the display-information that cannot be displayed with a high resolution, the print-information may include detailed information. Thus, it is possible to print detailed information using the print-information. Herein, the display-information refers to information for being displayed on the display of the portable terminal. The display-information may include selection information such as a place name of a map related to print-information, wherein the selection information is used when information to be transmitted to the portable terminal is selected.

In the present invention, the print-information may be stored, in a compressed form specially adapted to the print-information, in the storage means. Print-information generally has a greater data size than display-information. Therefore, if print-information is stored, in the same format as that of display-information, into the server apparatus, a great storage space is needed. Compression into the specialized format allows a reduction in a storage space needed to store the print-information.

In the present invention, the print-information may include information described in a specialized script language thereby making it possible to print the print-information as fast as possible although the portable terminals T1 and T2 are low in processing speed and have a low capacity of memory space compared with a typical home-use personal computer and thus the portable terminals T1 and T2 have limitations in terms of installed software.

In the present invention, the print-information corresponds to the display-information, and the printing means includes selection means for selecting print-information, to be printed by the printer, from print-information stored in the storage means. This makes it possible for the print-information to include plural versions of information so that a particular version of print-information is transmitted depending upon the type of print-information displayed on the display thereby allowing only necessary print-information to be printed on the specified paper in accordance with the selection of print-information made by the selection means.

In the printing system according to the present invention, the display-information may be outline-information indicating an outline of the print-information, and the printing means may include designation means for designating at least one piece of print-information to be printed by the printer, on the basis of outline information displayed on the display, and the printing means may print the printing-information designated by the designation means on the basis of the outline information, using the printer. That is, in this printing system, when the outline of print-information is displayed on the portable terminal, a desired print-information to be printed on the specified paper can be designated by the designation means. This allows the user of the portable terminal to easily view information and to easily select information to be printed.

In the present invention, the storage means may store information indicating a predetermined size of the specified paper and also stores arrangement information indicating the arrangement of the printing-information to be printed on the specified paper, and the printing means may arrange, in accordance with the arrangement information, the print-information designated by the designation means on the basis of the outline information. Thus, when one or more pieces of print-information selected by the user of the portable telephone are printed, the print-information is automatically arranged in accordance with the arrangement information and the arranged print-information is printed on the specified paper, thereby preventing the print-information from extending out of the paper.

In the present invention, the server apparatus may include authentication means storing authentication information for identifying a pre-registered caller, and the server apparatus may identify a caller by retrieving the authentication information in response to a request issued by the portable terminal, and only when the authentication of the caller on the basis of the authentication information has been successfully passed, the server apparatus may transmit the print-information from the storage means to the portable terminal. A caller can be identified on the basis of an ID, a password, or the like that is registered in advance in the authentication means. Furthermore, a caller can be identified on the basis of authentication information provided by a financial institution or the like having information about an account or a payment of the caller, or on the basis of authentication information including a record of an application or a reservation. This makes it possible to transmit print-information only to particular authorized users. The authentication information may be stored in the server apparatus or in another apparatus the server apparatus can get access to.

In the present invention, the print-information may include an authentication mark indicating that a caller is an authorized user. If the authentication mark is printed using the printing means, it becomes possible to determine that a caller is an authorized user, on the basis of authentication information provided by a financial institution or the like having information about an account or a payment of the caller, or on the basis of authentication information including a record of an application or a reservation. That is, it is possible to authenticate a particular user on the basis of the authentication mark printed on paper.

In the present invention, the authentication mark may be encrypted alphanumeric information described in the form of a two-dimensional or a one-dimensional bar code. By printing the pint-information including the authentication mark on paper, it becomes possible to easily determine that the caller has made a payment or transferred a money on the basis of information provided by a financial institution or the like having information about an account or a payment of the caller or to determine that the caller has made an application or a reservation. This allows the paper on which the print-information is printed to be used as, for example, a membership card, an admission card, an exchange ticket, a ticket, or the like.

In the present invention, the authentication means may store a count associated with the pre-registered caller, and the count may be increased or reduced in response to a request issued by the caller, print-information corresponding to the count may be transmitted to the portable terminal, and the resultant increased or reduced count may be stored. For example, when a payment, an application, or the like is made, an initial count value is set, and thereafter the count value is increased or reduced in response of each usage by an amount predetermined by the caller or the owner of the server apparatus. This makes it possible to count a service point or count the number of times that a coupon or a coupon ticket has been used. Furthermore, this can be used to make a reservation of a medical examination or treatment.

In the present invention, the authentication means may increase or reduce the count in response to a request issued by another pre-registered caller and may store the resultant increased or reduced count. For example, an initial count value is set depending upon the amount of payment made by a caller or depending upon the status of an application made by the caller. Thereafter, the count value is increased or reduced in response of each usage by an amount predetermined by a retailer or the owner of the server apparatus in accordance with a notification presented by the caller. This makes it possible to count a service point at a retail shop or count the number of times that a coupon or a coupon ticket has been used.

In the present invention, the authentication means may include payment confirmation means for confirming that a pre-registered caller has made a payment, and, in response to permission information indicating that the payment confirmation means has confirmed that the payment has made, the storage means may transmit the print-information to the portable terminal. This makes it possible to permit print-information to be transmitted only when a payment has been made.

In the present invention, the authentication means may include request confirmation means for confirming that a pre-registered caller has issued a predetermined particular request, and in response to permission information indicating that the request confirmation means has confirmed that the request has been issued, the storage means may transmit the print-information to the portable terminal. This makes it possible to, for example, accumulatively count a service point provided at a retail store and use the resultant point. It is also possible to count the number of times a travel coupon or a coupon ticket has been used, and to permit print-information to be transmitted depending upon the count value.

In the present invention, the display-information may be music/video content information, the paper may be a storage medium label and the print-information may be storage medium label data. The storage medium may be one of a magnetooptical disk such as a MO or mini disc (MD (registered trade mark)), a memory card such as a memory stick (registered trade mark), a videotape, an audiotape, and an optical disk such as a digital versatile disk (DVD (registered trade mark)). Thus, in response to downloading data into a storage medium, it is possible to receive print data and print it on a specified sheet that can be stuck to a case of the storage medium thereby forming, for example, a jacket design on the sheet.

In the present invention, the music/video content information may be one of an artist name, a title of music, a title of an album, and a playback time, thereby providing jacket information including information corresponding to downloaded audio visual content.

In the present invention, the print-information may be words-of-song card information, thereby providing jacket information including information corresponding to a downloaded audiovisual content.

In the present invention, the display-information may be magazine article outline information, and the print-information may be a whole magazine article. This makes it possible to distribute a content of a casual magazine such as a weekly magazine. In particular, it is possible to distribute a content including an image such as a photograph in a similar fashion to a weekly pictorial magazine.

In the present invention, the print-information may be a novel to be transmitted, and the display-information may be a title and an author name. This makes it possible to realize an on-line novel magazine or weekly magazine whose content can be easily obtained simply by specifying a title or an author. This is much more convenient for users compared with a case where one visits a bookshop, selects a desired book, and makes a payment.

An embodiment of the present invention will now be described, by way of example, with reference to the accompanying drawings, in which:
Fig. 1 is a block diagram illustrating the general structure of a printing system according to a first embodiment of the present invention;
Fig. 2 is a block diagram illustrating, in a simplified fashion, the internal structure of a portable telephone T1 or T2;
Figs. 3A to 3D are diagrams illustrating a first example of a printing operation of a printing system according to a first embodiment of the present invention, in which various kinds of information provided via a network N2 are printed on specified paper;
Figs. 4A and 4B are diagrams illustrating examples of print-information printed on a specified sheet, wherein Fig. 4A illustrates print-information corresponding to an item of "DESCRIPTION OF THE RESTAURANT" included in menu information M2, and Fig. 4B illustrates print-information corresponding to an item of "MENU";
Figs. 5A and 5B are diagrams illustrating a second example of a printing operation of a printing system according to an embodiment of the present invention, in which various kinds of information provided via a network N2 are printed on specified paper;
Fig. 6 is a block diagram illustrating the general structure of a printing system according to a second embodiment of the present invention;
Figs. 7A to 7J are diagrams illustrating a third example of a printing operation of the printing system according to the second embodiment of the present invention, in which various kinds of information provided via a network N2 are printed on specified paper;
Fig. 8 is a diagram illustrating an example of print-information printed on specified paper, wherein a detailed map corresponding to an item of "3-CHOME, SHINJUKU" is printed in this specific example;
Figs. 9A to 9I are diagrams illustrating a fourth example of a printing operation of the printing system according to the second embodiment of the present invention, in which various kinds of information provided via a network N2 are printed on specified paper;
Fig. 10 is a diagram illustrating an example of print-information printed on specified paper, wherein a ticket corresponding to items of " XXXXX CONCERT", "DATE: 2000.MM.DD", "PLACE: ΔΔ CONCERT HALL", "START AT: 18:30", and "SEAT NUMBER: A13 AND A14 (PAIR)" is printed in this specific example;
Figs. 11A to 11J are diagrams illustrating a fifth example of a printing operation of the printing system according to the second embodiment of the present invention, in which various kinds of information provided via a network N2 are printed on specified paper;
Figs. 12A to 12C are diagrams illustrating examples of print-information printed on specified paper, wherein Fig. 12A illustrates a printed MD seal for being stuck to a case, Fig. 12B illustrates a printed MD seal, and Fig. 12C illustrates a printed words-of-song card; and
Figs. 13A and 13B are diagrams illustrating a portable telephone T1 or T2 and a printer 50.

### DESCRIPTION OF THE PREFERRED EMBODIMENTS

A printing system according to a first embodiment of the present invention is described in detail below with reference to the accompanying drawings.

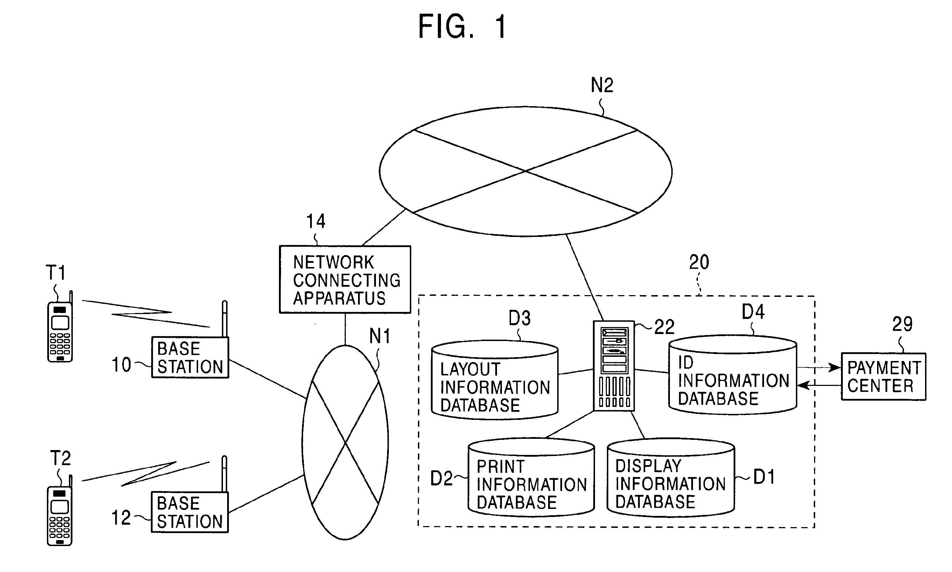

Fig. 1 is a block diagram illustrating the general structure of the printing system according to the first embodiment of the present invention. In Fig. 1, reference symbols T1 and T2 denote portable terminals, such as a PHS or a portable telephone (the term "portable telephone" is used in the present invention to generically describe such a portable terminal), which are used to transmit and receive voice information via base stations 10 and 12 and via a line network N1. The portable telephones T1 and T2 are capable of transmitting and receiving not only voice information but also other types of information such as character information, image information and music information.

The line network N1 is connected to a network N2 such as the Internet via a network connection unit 14. The network connection unit 14 serves to connect the line network N1 of portable telephones T1 and T2 with the network N2. To this end, the network connection unit 14 converts data formats and communication protocols of various kinds of information distributed via the network N2 and transmitted/received via the line network N1, and the network connection unit 14 also controls and manages the communication path.

Reference numeral 20 denotes a site connected to the network N2. In the present description, a "site" refers to a computer system that is connected to the network N2 so as to provide various kinds of information. There is disposed a server 22 at the site 20, wherein a server apparatus is formed of the server 22, a display-information database D1, a print-information database D2, a layout-information database D3, and an ID-information database D4. The display-information database D1, the print-information database D2, and the layout-information database D3 form storage means, and the ID-information database D4 forms authentication means.

If the server apparatus 22 receives an information transmission request via the network N2, the server apparatus 22 retrieves authentication information from the ID information database D4 and further retrieves necessary information from the display-information database D1, the print-information database D2, and the layout-information database D3 in accordance with the retrieved authentication information. The resultant information is transmitted to the issuer of the information transmission request. If an information update command is issued via the network N2 or via a console (not shown) of the server apparatus 22, information stored on the display-information database D1, the print-information database D2, and the layout-information database D3 is updated in accordance with the command.

The display-information database D1 stores information to be displayed on the display device of the portable telephone T1 or T2. Herein, the display-information may include image information produced so as to have a resolution corresponding to the displaying capability (for example, the capability of displaying a color image with a resolution of 150 by 150 pixels) of the portable telephone T1 or T2, and may include character information (including, for example, 3000 or less number of characters) produced in accordance with the communication standard associated with the line network N1. In the present embodiment, for simplicity, the display-information is assumed to consist of character information and image information. However, the display-information may include only character information or moving image information, or the display-information may include moving image information. The display-information database D1 also stores outline information indicating, in the form of an image, outlines of a plurality of print-information stored in the print-information database D2.

The print-information database D2 stores print-information to be printed by a printer, which is connected to the portable telephone T1 or T2, on a predetermined type of paper. The predetermined type of paper has, for example, a B8-size. The print-information includes more detailed information than corresponding display-information. More specifically, the print-information includes detailed information that cannot be clearly displayed on the low-resolution display of the portable telephone T1 or T2. For example, in the case of map information, print-information thereof includes symbols indicating public institutions such as a police station and a fire station while the display-information thereof includes no such symbol.

In the print-information database D2, plural pieces of print-information are stored. Each piece of print-information may include, in addition to the information to be printed, information indicating the size of the like of paper on which the information is to be printed and may also include layout information indicating the layout according to which the information is to be printed on the specified paper. Alternatively, each piece of print-information may include detailed information to be printed corresponding to image information but may not include layout information. In the case where the print-information includes no layout information, priority information is attached to the print-information so as to indicate the priority according to which the print-information should be printed into a specified layout. For example, when the print-information is specified to be printed in two areas on left-hand and right-hand sides of a specified sheet, if image information is assigned higher priority, then the image information is always printed in the area on the left-hand side.

The print-information may include a command such as a layout setting command or a print command described in a specialized script language. Such a command may be used, for example, when plural pieces of information stored in different sites are printed at the same time.

The layout-information database D3 stores layout information specifying the layout according to which one or more pieces of print-information stored in the print-information database D2 are printed by the printer connected to the portable telephone T1 or T2. The layout information is defined in corresponding to a combination of print-information (including no layout information) stored in the print-information database so as to specify the layout according to which one or more pieces of print-information are printed on paper with the predetermined size. More specifically, the layout information specifies the layout so that when the user of the portable telephone T1 or T2 prints desired print-information using the printer, the print-information is printed in a beautiful fashion within a specified area smaller than the size of the paper.

The ID-information database D4 stores authentication information such as an authentication number (an ID or a password) that has been registered, in advance, in accordance with information input by the user of the portable telephone T1 or T2. The ID-information database D4 also stores authentication information in response to permission information issued by a payment center 29 serving as request confirmation means to indicate that the user of the portable telephone T1 or T2 has performed a particular procedure such as a payment, an application, or a reservation. Furthermore, the ID-information database D4 stores a count assigned to each user, wherein after the count has been initially assigned, the count is increased or reduced in response to an operation.

Although, in this specific example, the ID-information database D4 is directly connected to the server apparatus 22, the ID-information database D4 may be indirectly connected to the server apparatus 22 via the network N2. Similarly, the payment center 29 may be indirectly connected to the ID-information database D4 via the network N2 and the server apparatus 22. Alternatively, the ID-information database D4 and/or the payment center 29 may be disposed in another site connected via the network N2 or may be disposed in another database, as long as necessary data can be accessed and retrieved by the server apparatus 22.

The internal structure of the portable telephones T1 and T2 used in the printing system according to the present embodiment is briefly described below.

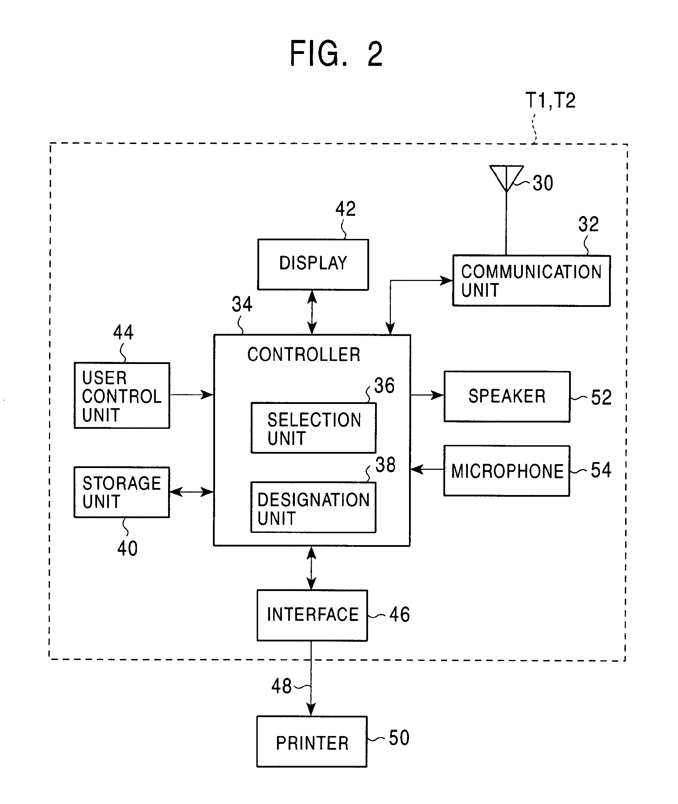

Fig. 2 is a block diagram illustrating the general internal structure of the portable telephones T1 and T2. In Fig. 2, antenna 30 is electrically connected to a communication unit 32. The communication unit 32 performs demodulation or detection on a signal received via the antenna 30 and outputs the resultant received information to a controller 34. The communication unit 32 also modulates transmission information supplied from the controller 34 and transmits the resultant information via the antenna 30.

The controller 34 of each of the portable telephones T1 and T2 forms a part of the printing means, and the controller 34 also serves to control the total operation of each of portable telephones T1 and T2. The controller 34 is connected to a storage unit 40, a display 42, a user control unit 44, and an interface 46. The storage unit 40 is formed of, for example, a RAM (Random Access Memory) and is used to temporarily store received information outputted from the communication unit 32 to the controller 34 or temporarily store an operation signal that is outputted from the user control unit 44 when the user control unit 44 is operated by the user of the portable telephone T1 or T2.

The display 42 is formed of, for example, a liquid crystal display. The display 42 serves to display the content of the received information outputted from the communication unit 32 to the controller 34 so as to present the content of the received information to the user of the portable telephone T1 or T2 and also display other information such as a current time or information indicating the status (such as the remaining capacity of a battery or the intensity of a radio wave being received) of the portable telephone T1 or T2. The user control unit 44 includes control buttons such as ten-key buttons disposed on a front surface of the portable telephone T1 or T2. In response to an operation performed by the user of the portable telephone T1 or T2, a control signal is outputted from the user control unit 44 to the controller 34.

The interface 46 serves to interface the portable telephone T1 or T2 with another information device (such as a personal computer or a printer) via a connection cable. In the example shown in Fig. 2, a printer 50 is connected to the interface 46 via a connection cable 48.

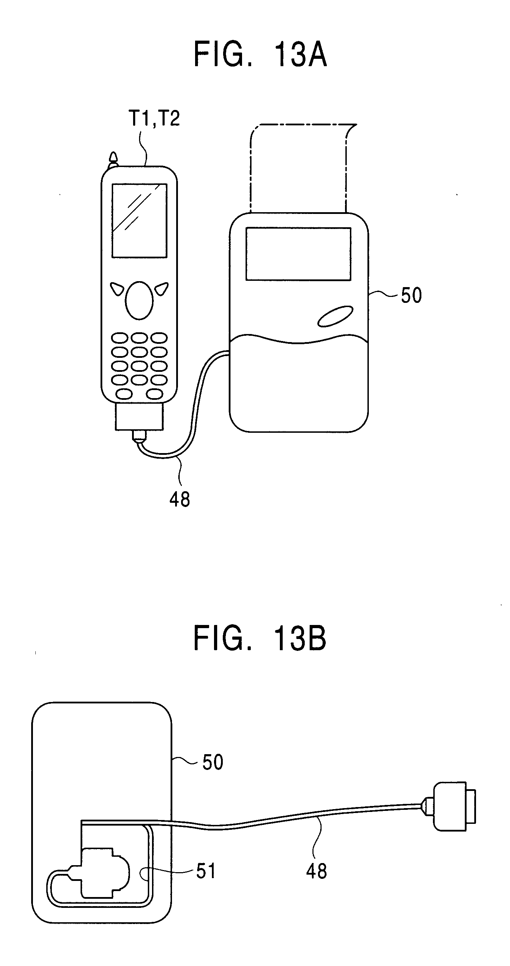

Figs. 13A and 13B show a printer and a portable telephone.

The printer 50 is used to print on paper with a predetermined size such as a B8-size. As shown in Fig. 13A, the printer 50 has a small size and a small weight so that the printer 50 can be carried together with the portable telephone T1 or T2. As shown in Fig. 13B, a recessed part 51 is formed on the back side of the so that a connection cable 48 can be put into the recessed part thereby allowing the printer 50 to be carried in an improved convenient fashion.

A speaker 52 generates a voice/sound in accordance with voice information transmitted via the line network N1 shown in Fig. 1 or in accordance with voice or music information transmitted from the network N2 and received via the network connection unit 14 and the line network N1 so as to present the voice/sound to the user of the portable telephone T1 or T2. A microphone 54 converts a voice generated by the user into voice information.

The controller 34 includes a selection unit 36 serving as selection means and a designation unit 38 serving as designation means. When information is displayed on the display 42 to prompt the user to select desired print-information to be printed by the printer 50 in accordance with a command described in the script language, the selection unit 36 displays a cursor on the display 42 and moves the cursor displayed on the display 42 in accordance with control information outputted from the user control unit 44. When a button is pressed by the user to make a selection, the selection unit 36 transmits a transmission request signal to the server 22 to transmit print-information corresponding to the location at which the cursor is displayed. In the example shown in Fig. 2, the selection unit 36 and the designation unit 38 are disposed in the controller 34. The controller 34 and the selection unit 36 may be implemented by means of hardware or software. When getting access to the server 22, the controller 34 may transmit an authentication number such as a caller number to the server 22 to indicate that the user is an authorized user who has been registered via a necessary application. Hereinafter, for the purpose of simplicity, the button that is pressed by the user to make a decision in terms of selection will be referred to as a "decision button".

Like the selection unit 36, the designation unit 38 is used to select print-information to be printed by the printer 50 on the basis of control information outputted from the user control unit 44 and transmits a request for transmission of the selected print-information to the server 22. However, the difference is that when outline information indicating the outlines of plural pieces of print-information is displayed, in the form of an image, on the display 42, the designation unit 38 may designate one or more pieces of print-information to be printed.

The operation of the printing system according to the present embodiment of the invention is described below for the case where various kinds of information received via the network N2 is printed on paper with the predetermined size In the following description, it is assumed that the server 22 provides information about gourmet restaurants in a certain city. It is also assumed that the printer 50 is connected to the portable telephone T1 via the cable 48.

### First Example of Printing Operation

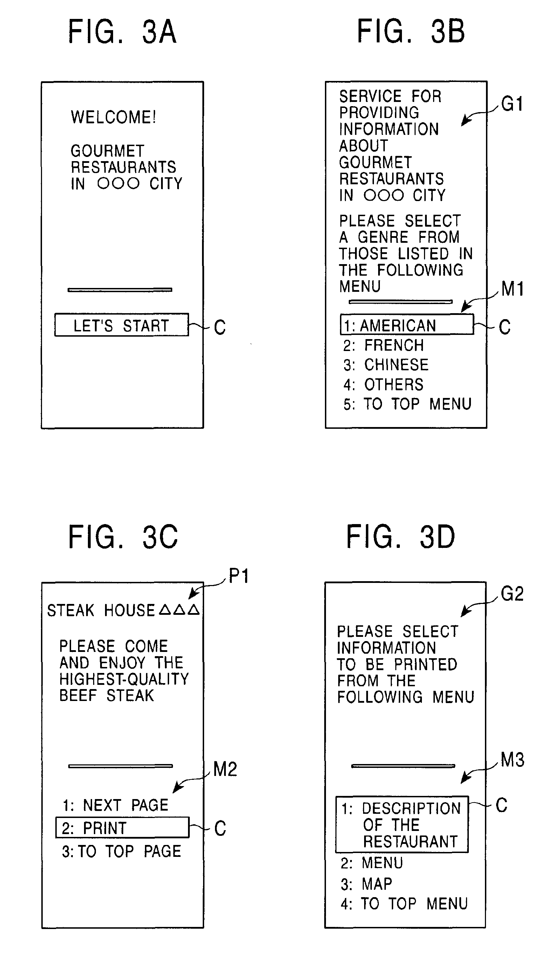

Figs. 3A to 3D illustrate a first example of a printing operation of the printing system according to the present embodiment of the invention, in which various kinds of information provided via the network N2 are printed on specified paper. In the present embodiment, it is assumed that printing is performed on the specified paper in accordance with print-information including layout information specifying the layout.

A user of a portable telephone T1, who wants to print, on specified paper, various kinds of information provided via a network N2, makes a payment in advance or registers for subscription and enters into a contract to make a payment by means of transfer or the like in response to a demand for a payment. Upon receiving the application for the subscription, authentication information and permission information of the user of the portable telephone T1 is stored into the ID-information database D4 via the payment center 29. The permission information includes a caller number such as a telephone number or an identification number such as an ID or a password for identifying a caller and also includes information, provided by a financial institution or the like, about an account number or the like used for the payment, and further includes information about reception of an application or a reservation.

When the user of the portable telephone T1 operates the user control unit 44 to get to the server 22, the selection unit 36 transmits an access request signal to the serve 22 via the transmission unit 32. Herein, at the same time, the controller 34 transmits an authentication number such as a caller number to the server 22 via the transmission unit 32.

The server 22 retrieves the authentication number such as the caller number from the authentication information stored in the ID-information database D4 to check whether the access request signal transmitted to the server 22 is from an authorized user of the portable telephone T1 who has registered permission information.

If the caller number is successfully authenticated, the server 22 permits the user of the portable telephone T1 to access the server 22. In this case, the server 22 reads display-information representing a top page from the display-information database D1 and transmits it to the portable telephone T1. As a result, the top page such as that shown in Fig. 3A is displayed on the display 42 of the portable telephone T1. When a cursor C is displayed on the top page as shown in Fig. 3A, if the user of the portable telephone T1 presses the decision button, the server 22 reads corresponding display-information from the display-information database D1 and transmits it to the portable telephone T1. As a result, the display-information is displayed on the display 42, for example, as shown in Fig. 3B.

In the example shown in Fig. 3B, guidance information G1 and menu information M1 are displayed, and the cursor C is displayed in the menu M1 by the selection unit 36. The guidance information G1 gives a brief description of the operation that should be performed by the user of the portable telephone T1. The menu information M1 includes a list of pages that can be opened. In the example shown in Fig. 3B, items listed in the menu information M1 include "AMERICAN", "FRENCH", "CHINESE", "OTHERS", and "TO TOP MENU".

After the user of the portable telephone T1 has moved the cursor C to "AMERICAN" in the menu information M1 by operating the user control unit 44, if the user presses the decision button, the server 22 reads corresponding display-information from the display-information database D1 and transmits it to the portable telephone T1. As a result, the display-information is displayed on the display device 42 as shown in Fig. 3C. In the present embodiment, for simplicity of description, it is assumed that gourmet restaurant information includes only information about one steak restaurant in an item of "AMERICAN" restaurants. In the example shown in Fig. 3C, information P1 describing the pork cutlet restaurant and menu information M2 are displayed on the display 42 of the portable telephone T1. Herein, both the description information P1 and the menu information are of character information. Items listed in the menu information M2 include "NEXT PAGE", "PRINT", and "TO TOP MENU".

If the user of the portable telephone T1 moves the cursor C to "PRINT" by operating the user control unit 44 and presses the decision button, the server 22 reads corresponding display-information from the display-information database D1 and transmits it to the portable telephone T1. As a result, the display-information is displayed on the display device 42 as shown in Fig. 3D. In the example shown in Fig. 3D, guidance information G2 displayed prompts the user of the portable telephone T1 to select an item to be printed from the print menu information M3. In this example, the items listed in the menu information M3 include, for example, "DESCRIPTION OF THE RESTAURANT", "MENU", "MAP", and "TO TOP MENU".

If the user of the portable telephone T1 moves the cursor C to "DESCRIPTION OF THE RESTAURANT" by operating the user control unit 44 and presses the decision button, the selection unit 36 transmits a transmission request signal to the server 22 via the transmission unit 32 to request the server 22 to transmit print-information corresponding to the item of "DESCRIPTION OF THE RESTAURANT". Upon receiving the transmission request signal, the server 22 reads the print-information corresponding to the item of "DESCRIPTION OF THE RESTAURANT" from the print-information database D2 and transmits it to the portable telephone T1.

If the portable telephone t1 receives the print-information transmitted from the server 22, the controller 34 outputs the received print-information to the printer 50 via the interface 46. In the above process, if the received print-information is large in data size, the controller 34 temporarily stores the received print-information into the storage unit 40, and the controller 34 reads the print-information from the storage unit 40 in response to a print-information output request issued by the printer 50 and outputs it to the printer 50. The printer 50 prints the print-information received from the portable telephone T1 via the connection cable 48.

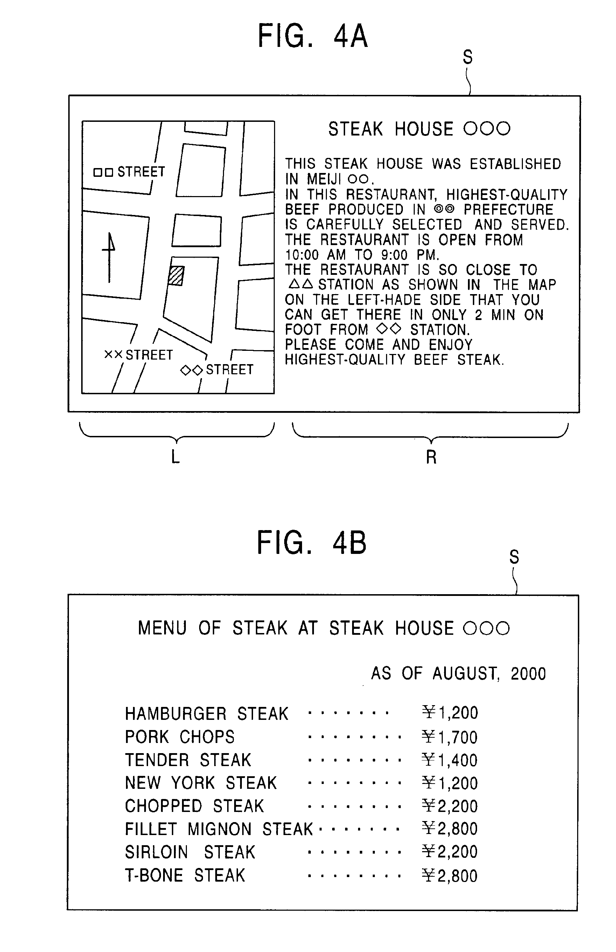

Via the process described above, the print-information selected by the user of the portable telephone T1 is printed on the specified sheet. Figs. 4A and 4B illustrate examples of print-information printed on the specified sheet, wherein Fig. 4A illustrates the print-information corresponding to the item of "DESCRIPTION OF THE RESTAURANT" included in the menu information M2, and Fig. 4B illustrates the print-information corresponding to the item of "MENU". In the example shown in Fig. 4A, the print-information corresponding to the menu of "DESCRIPTION OF THE RESTAURANT" is printed on a specified sheet S oriented in a horizontal direction such that a map indicating the path to the restaurant is printed in an area L on the left-hand side in accordance with image information, and the description of the restaurant is printed in an area R on the right-hand side in accordance with character information.

Of the items shown in Fig. 3D, of "MENU" is selected, the selection unit 36 transmits a transmission request signal to the server 22 via the transmission unit 32 to request the server 22 to transmit print-information corresponding to the item of "MENU". Upon receiving the transmission request signal, the server 22 reads the print-information corresponding to the item of "MENU" from the print-information database D2 and transmits it to the portable telephone T1. If the portable telephone T1 receives the print-information transmitted from the server 22, the portable telephone T1 outputs the received print-information to the printer 50. In the case where the item of "MENU" is selected by the user of the portable telephone T1, a menu (menu of foods served by the steak restaurant) is printed, as shown in Fig. 4B, on a specified sheet S in accordance with the print-information including only character information. On the other hand, in the case where "MAP" is selected from the items shown in Fig. 3D, a map, which is the same as that printed in the area L on the left-hand side of the specified sheet S shown in Fig. 4A, is printed in an area substantially equal to the whole size of the specified paper.

### Second Example of Printing Operation

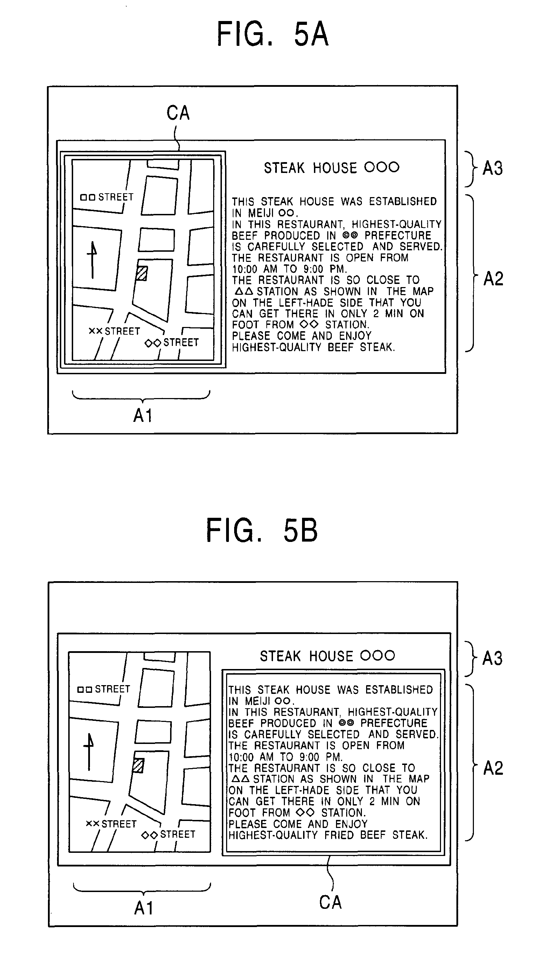

Figs. 5A and 5D illustrate a second example of a printing operation of the printing system according to the present embodiment of the invention, in which various kinds of information provided via the network N2 are printed on specified paper. In the present embodiment, it is assumed that printing is performed on the specified paper in accordance with print-information including layout information specifying the printing layout.

The process in which "PRINT" is selected from the items shown in Fig. 3C after the user of the portable telephone T1 gets access to the server 22 is performed in a similar manner to the first example of the operation described above. If "PRINT" is selected from the items shown in Fig. 3C, the server 22 reads outline information representing the outlines of plural pieces of print-information in the form of image information from the display-information database D1 and transmits it to the portable telephone T1. As a result, the outline information is displayed on the display device 42, for example, as shown in Fig. 5. Fig. 5 illustrates an example of displayed outline information.

In the example shown in Fig. 5, the outline information is obtained by converting the print-information printed on the specified sheet S as shown in Fig. 4A into the form of image information, and the outline information includes three areas: a map area A1, a character area A2, and a title area A3. In response to an operation performed on the user control unit 44 by the user of the portable telephone T1, the designation unit 38 displays an area designation cursor CA in the outline information such that a specified area is enclosed by the area designation cursor CA. In the example shown in Fig. 5A, the map area A1 is enclosed by the area designation cursor CA. If the user of the portable telephone T1 operates the user control unit 44, the designation unit 38 changes the area enclosed by the area designation cursor CA. In the example shown in Fig. 5B, the character area A2 is enclosed by the area designation cursor CA. It is possible to designate a plurality of areas, in the outline information, to be enclosed by the area designation cursor CA. For example, it is possible to designate the map area A1 and the character area A2 to be enclosed by the area designation cursor CA. Furthermore, all areas can be designated to be enclosed by the area designation cursor CA.

When one or more areas in the outline information is enclosed by the area designation cursor CA, if the user of the portable telephone T1 presses the decision button, the selection unit 38 transmits a transmission request signal to the server 22 to request the server 22 to transmit print-information corresponding to the area enclosed by the area designation cursor CA. If the server 22 receives the transmission request signal, the server 22 reads print-information specified by the transmission request signal from the print-information database D2 and further reads layout information corresponding to a combination of print-information specified by the transmission request signal from the layout-information database D3. The resultant print-information and layout-information are transmitted to the portable telephone T1.

If the portable telephone T1 receives the layout-information and the print-information transmitted from the server 22, the controller 34 arranges the print-information in accordance with the layout information. In this process, the arrangement of the print-information is performed in accordance with priority information attached with the print-information. For example, the print-information is arranged such that image information is placed in an area on the left-hand side of the specified sheet and character information is placed in an area on the right-hand side. After completion of the arrangement of the print-information, the controller 34 outputs the arranged print-information to the printer 50 via the interface 46 and the connection cable 48, and the printer 50 prints the received print-information on the specified sheet.

When the all areas in the outline information are enclosed by the area designation cursor CA as shown in Fig. 5, if the user of the portable telephone T1 presses the decision button, printing is performed on the specified sheet as shown in Fig. 4A. However, if the user of the portable telephone T1 presses the decision button when only the map area A1 is enclosed by the area designation cursor CA as shown in Fig. 5A, the map is printed in the substantially whole area of the specified sheet S. In the case where the user of the portable telephone T1 presses the decision button when only the character area A2 is enclosed by the area designation cursor CA as shown in Fig. 5B, characters are printed in the substantially whole area of the specified sheet S.

In the present embodiment, the printing system includes the server 20, portable terminals T1 and T2 for receiving information transmitted from the server 20, and the printers 50, connected to the respective portable terminals T1 and T2, for printing on specified paper. The server 20 includes the display-information database D1, the print-information database D2, and the layout-information database D3, which serve as storage means for storing display-information to be displayed on the display 42 of the portable terminal T1 or T2 and also storing print-information including information that is more detailed than corresponding display-information. Each of the portable terminals T1 and T2 includes the display means for displaying display-information, stored in the server 20, on the display 42 and also includes the printing means for printing print-information by the printer 50. Thus, in this printing system in which the server 20 stores both display-information to be displayed on the display 42 of each of the portable terminals T1 and T2 and print-information including information that is more detailed than corresponding display-information, printing is performed on specified sheet S not in accordance with the display-information for being displayed on the display 42 of the portable terminal T1 or T2 but in accordance with the print-information that is adapted to the size of the specified sheet S and that includes information that is more detailed than corresponding display-information thereby allowing the detailed information to be printed within the size of the specified sheet S.

In the present embodiment, the print-information includes information described in the specialized script language so that the print-information can be printed as fast as possible although the portable terminals T1 and T2 are low in processing speed and have a low capacity of memory space compared with typical home-use personal computers and thus the portable terminals T1 and T2 have limitations in terms of installed software.

In the present embodiment, the server 20 includes the ID-information database D4 serving as authentication means for storing authentication information for identifying pre-registered callers. In response to a request from the portable terminal T1 or T2, the server 20 retrieves the authentication information to identify the caller. Only when the caller is successfully authenticated on the basis of the authentication information, the server 20 transmits print-information from the print-information database D2 to the portable terminal T1 or T2. That is, print-information is transmitted only when the caller (the user of the portable telephone T1) is identified by the authentication means as an authorized caller on the basis of the pre-registered information such as IDs or passwords, and no print-information is transmitted when the authentication of the caller fails.

A printing system according to a second embodiment of the present invention is described below with reference to the accompanying drawings. In this second embodiment, similar parts to those shown in Figs. 1 to 5 according to the first embodiment are denoted by similar reference numerals and they are not described herein in further detail.

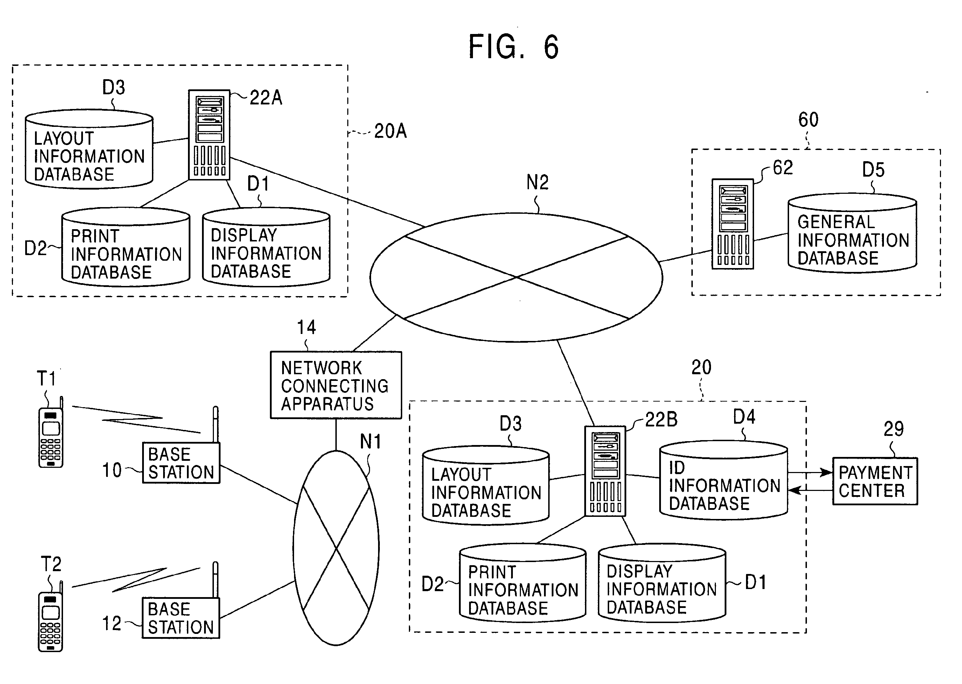

Fig. 6 is a block diagram illustrating the general structure of the printing system according to the second embodiment of the present invention.

In the present embodiment, as shown in Fig. 6, sites 20, 20A, and 60 are connected to a network N2.

There is disposed a server 22B at the site 20, and a server apparatus is formed of the server 22B, a display-information database D1, a print-information database D2, a layout-information database D3, and an ID-information database D4.

On the other hand, a server 22A is disposed at the site 20A, and a server apparatus is formed of the server 22A, a display-information database D1, a print-information database D2, and a layout-information database D3.

A server 62 is disposed at the site 60, and a server apparatus is formed of the server 62 and a general-information database D5.

The display-information database D1, the print-information database D2, and, the layout-information database D3, and the general-information database D5 form storage means, and the ID-information database D4 forms authentication means.

The servers 22A, 22B, and 62 have functions similar to those of the server 22 according to the first embodiment.

If the server apparatus 22A receives an information transmission request via the network N2, the server apparatus 22A retrieves necessary information from the display-information database D1, the print-information database D2, and the layout-information database D3 and transmits the requested information to the issuer of the information transmission request. If an information update command is issued via the network N2 or via a console (not shown) of the server apparatus 22A, information stored on the display-information database D1, the print-information database D2, and the layout-information database D3 is updated in accordance with the command.

Similarly, if the server apparatus 62 receives an information transmission request via the network N2, the server apparatus 62 retrieves necessary information from the general-information database D5 and transmits the retrieved information to the issuer of the information transmission request. If an information update command is issued via the network N2 or via a console (not shown) of the server apparatus 62, information stored on the general-information database D5 is updated in accordance with the command.

If the server apparatus 22B receives an information transmission request via the network N2, the server apparatus 22B transmits an information transmission request to the server 20 or 60 in accordance with authentication information retrieved from the ID-information database D4, or the server apparatus 22B retrieves necessary information from the display-information database D1, the print-information database D2, and the layout-information database D3 or from the server apparatus 20A (the display-information database D1, the print-information database D2, and the layout-information database D3) at the site 20A or from the server apparatus 62 (the general-information database D5) at the site 60 and the server apparatus 22B transmits the retrieved information to the issuer of the information transmission request. In the above process, as will be described later, the server apparatus 22B converts the format of the general-information received from the server apparatus 62 (the general-information database D5) at the site 60 into a format specialized for the print-information, wherein the print-information in the specialized format includes the layout-information and information about the size of the specified paper.

The general-information database D5 stores general-information to be displayed on the display of the portable telephone T1 or T2 or on a display of a computer connected to the network N2. The general-information database D5 also stores information indicating, for example, the status of reservations of concerts or the like associated with the general-information. The general-information is information for being displayed. However, unlike the display-information described above, the general-information does not have limitations in terms of the screen size or the image processing capability. Thus, as will be described later, the server apparatus 22B converts the general-information into information in the specialized format such as image information adapted to the capability of the display (for example, capable of displaying a color image with a resolution of 150 by 150 pixels) of the portable telephone T1 or T2 or character information (consisting of, for example, 3000 characters or a smaller number of characters) according to the communication standard of the line network N1. Furthermore, the general-information can be converted into information into the same format as that of the above-described print-information for being printed on specified paper using a printer connected to the portable telephone T1 or T2.

### Third Example of Printing Operation

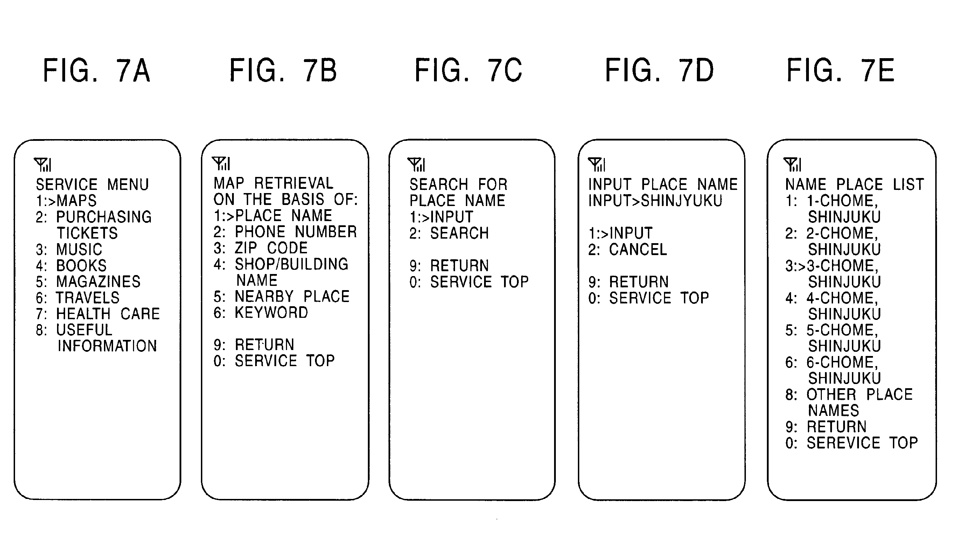

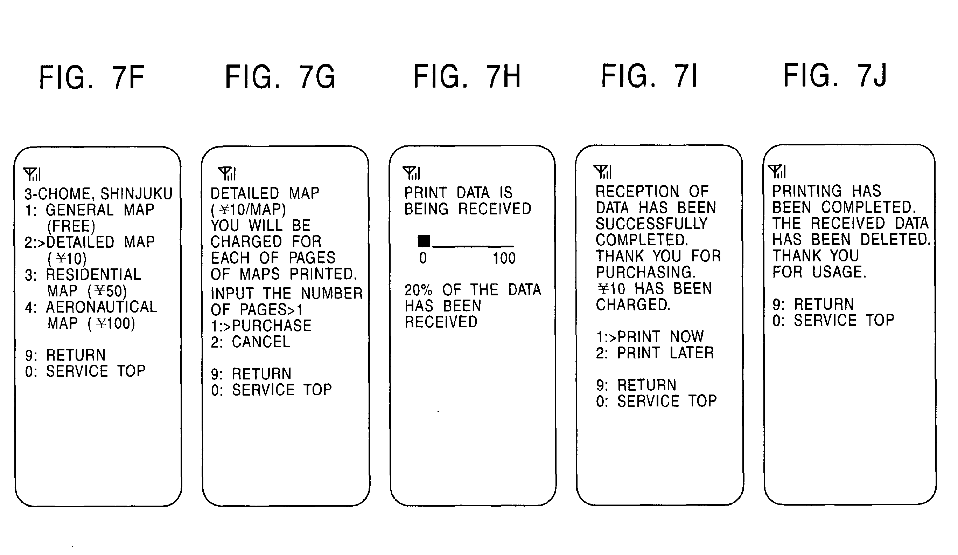

Figs. 7A to 7J illustrate a third example of a printing operation of the printing system according to the second embodiment of the invention, in which various kinds of information provided via the network N2 are printed on specified paper. In the present embodiment, it is assumed that printing is performed on the specified paper in accordance with print-information including layout information specifying the layout.

A user of a portable telephone T1, who wants to print, on specified paper, various kinds of information provided via a network N2, makes a payment in advance or registers for subscription and enters into a contract to make a payment by means of transfer or the like in response to a demand for a payment. If such a contract has been established, billing data associated with the user of the portable telephone T1 is stored in the payment center 29, and authentication information and permission information associated with the user of the portable telephone T1 are stored in the ID-information database D4 via the payment center 29. The permission information includes a caller number such as a telephone number or an identification number such as an ID or a password for identifying a caller and also includes information, provided by a financial institution or the like, about an account number or the like used for the payment, and further includes information about reception of an application or a reservation.

When the user of the portable telephone T1 operates the user control unit 44 to get to the server 22B, the selection unit 36 transmits an access request signal to the serve 22B via the transmission unit 32. Herein, at the same time, the controller 34 transmits an authentication number such as a caller number to the server 22B via the transmission unit 32.

The server 22B retrieves the authentication number such as the caller number from the authentication information stored in the ID-information database D4 to check whether the access request signal transmitted to the server 22B is from an authorized user of the portable telephone T1 who has registered permission information.

If the caller number is successfully authenticated, the server 22B permits the user of the portable telephone T1 to access the server 22B. In this case, the server 22B reads display-information representing a top page from the display-information database D1 and transmits it to the portable telephone T1. As a result, a top page indicating a service menu (hereinafter, such a top page will be denoted as a "service top") such as that shown in Fig. 7A is displayed on the display 42 of the portable telephone T1.

On the top page shown in Fig. 7A, menu information corresponding to the menu information M1 shown in Fig. 3 is displayed, wherein items listed in the displayed menu information include "1: MAPS", "2: PURCHASING TICKETS", "3: MUSIC", "4: BOOKS", "5: MAGAZINES", "6: TRAVELS", "7: HEALTH CARE", and "8: USEFUL INFORMATION". In the menu information, a cursor in the form of ">" corresponding to the cursor C shown in Fig. 3 is displayed in one of spaces between the item names and the corresponding selection numbers assigned serially to the respective items. On this top page, a character string of "SERVICE MENU" corresponding to the guidance information G1 shown in Fig. 3 is displayed in the top line.

On the top page shown in Fig. 7A, if the user of the portable telephone T1 presses the decision button after moving the cursor ">" to "1: MAPS" in the menu information by operating the user control unit 44, the server 22B reads corresponding display-information from the display-information database D1 and transmits the display-information corresponding to "1: MAPS" to the portable telephone T1. As a result, the display-information is displayed on the display device 42, for example, as shown in Fig. 7B. In the example shown in Fig. 7B, a character string of "MAP RETRIEVAL ON THE BASIS OF:" is displayed as guidance information, and menu information is displayed that includes items "1: PLACE NAME", "2: PHONE NUMBER", "3: ZIP CODE", "4: SHOP/BUILDING NAME", "5: NEARBY PLACE", "6: KEYWORD", "9: RETURN", and "0: SERVICE TOP".

If the user of the portable telephone T1 moves the cursor ">" to "PLACE NAME" by operating the user control unit 44 and presses the decision button, the server 22B reads corresponding display-information from the display-information database D1 and transmits it to the portable telephone T1. As a result, the display-information is displayed on the display device 42 as shown in Fig. 7C. In the example shown in Fig. 7C, a character string of "SEARCH FOR PLACE NAME" is displayed as guidance information, and menu information is displayed that includes items of, for example, "1: INPUT", "2: SEARCH", "9: RETURN", and "0: SERVICE TOP", which can be selected by the user of the portable telephone T1.

If the user of the portable telephone T1 moves the cursor ">" to "1: INPUT" by operating the user control unit 44 and presses the decision button, the server 22B reads corresponding display-information from the display-information database D1 and transmits it to the portable telephone T1. In the example shown in Fig. 7D, a character string of "INPUT PLACE NAME" is displayed as guidance information, and menu information is displayed that includes items "1: INPUT", "2: CANCEL", "9: RETURN", and "0: SERVICE TOP". If a character string of "SHINJUKU" is input via the user control unit 44, and if the decision button is pressed after moving the cursor ">" to "1: INPUT" as shown in Fig. 7D, then, as shown in Fig. 7E, "NAME PLACE LIST" is displayed on the display 42 as guidance information and menu information is also displayed that includes items of, for example, "1: 1-CHOME, SHINJUKU", "2: 2-CHOME, SHINJUKU", "3: 3-CHOME, SHINJUKU", "4: 4-CHOME, SHINJUKU", "5: 5-CHOME, SHINJUKU", "6: 6-CHOME, SHINJUKU", "7: OTHER PLACE NAMES", "9: RETURN", and "0: SERVICE TOP".

If the user of the portable telephone T1 moves the cursor ">" to "3: 3-CHOME, SHINJUKU" by operating the user control unit 44 and presses the decision button, the server 22 reads corresponding display-information from the display-information database D1 and transmits it to the portable telephone T1. As a result, the display-information is displayed on the display device 42 as shown in Fig. 7F. In the example shown in Fig. 7F, is displayed a page used by the user of the portable telephone T1 to select an item to be printed from print menu information. On this page, a character string of "3-CHOME, SHINJUKU" is displayed as guidance information, and menu information including items of, for example, "1: GENERAL MAP (FREE)", "2: DETAILED MAP (¥10)", "3: RESIDENTIAL MAL (¥50)", "4: AERONAUTICAL MAP (¥100)", "9: RETURN", and "0: SERVICE TOP" is displayed.

If the user of the portable telephone T1 moves the cursor ">" to "2: DETAILED MAP (¥10)" by operating the user control unit 44 and presses the decision button, the server 22B reads display-information representing a "purchase" confirmation page as shown in Fig. 7G from the display-information database D1 and the transmits it to portable telephone T1. In this example, a character string "DETAILED MAP (¥10/MAP) YOU WILL BE CHARGED FOR EACH OF PAGES OF MAPS PRINTED" is displayed as guidance information of a dialog page that prompts to the user of the portable telephone T1 to confirm whether an item to be printed has been correctly selected from the print menu information. Furthermore, confirmation menu information is displayed that includes items of, for example, "INPUT THE NUMBER OF PAGES", "1: PURCHASE", "2: CANCEL", "9: RETURN", and "0: SERVICE TOP". If "1" is input in the item of "INPUT THE NUMBER OF PAGES" as the number of pages to be printed by operating the user control unit 44, and then if the cursor ">" is moved to "1: PURCHASE" and the decision button is pressed, the selection unit 36 transmits a transmission request signal to the server 22B via the transmission unit 32 to request the server 22B to transmit print-information corresponding to the item of "DETAILED MAP (¥10/MAP)".

If the server 22B receives the transmission request signal, the server 22B transmits an authentication request to the ID-information database D4 to inquire as to the authentication information of the user of the portable telephone T1. Only when the server 22B receives, from the ID-information database D4, permission information indicating that it is possible to charge the user of the portable telephone T1 for the fee, the server 22B reads print-information corresponding to the items "3-CHOME, SHINJUKU" and "DETAILED MAP (¥10/MAP)" from the pint-information database D2 and transmits it to the portable telephone T1. In this case, the server 22B also transmits a charge request to the payment center 29 to request the payment center 29 to charge the user of the portable telephone T1.

Furthermore, the server 22B reads display-information for displaying a page of "PRINT DATA IS BEING RECEIVED" as shown in Fig. 7H from the display-information database D1 and transmits it to the portable telephone T1. On the page of "PRINT DATA IS BEING RECEIVED", a character string of "20% OF THE DATA HAS BEEN RECEIVED" is displayed to indicate the progress, in percent, of the operation of receiving the necessary print-information having a greater data size than display-information. An indicator in the form of "■ " is also displayed to graphically indicate the relative progress of the operation of receiving the data. Herein, the length of " " indicates the relative amount of remaining data being received, and the length of "■" indicates the relative amount of data that has been received.

The controller 34 of the portable telephone T1 stores the print-information received via the interface 46 into the storage unit 40.

Upon receiving the charge request, the payment center 29 performs a predetermined process on charge data associated with the user of the portable telephone T1, in accordance with the charge request.

If the transmission of the print-information from the server 22B to the portable telephone T1 is completed, the server 22B reads display-information for displaying a page of "RECEPTION OF DATA HAS BEEN SUCCESSFULLY COMPLETED" as shown in Fig. 7I from the display-information database D1 and transmits it to the portable telephone T1. On the page of "RECEPTION OF DATA HAS BEEN SUCCESSFULLY COMPLETED", a character string of "RECEPTION OF DATA HAS BEEN SUCCESSFULLY COMPLETED. THANK YOU FOR PURCHASING. ¥10 HAS BEEN CHARGED." is displayed as guidance information, and confirmation menu information including items of, for example, "1: PRINT NOW", "2: PRINT LATER", "9: RETURN", and "0: SERVICE TOP" is displayed.

If the user of the portable telephone T1 moves the cursor ">" to "1: PRINT NOW" by operating the user control unit 44 and presses the decision button, the controller 34 outputs the received print-information to the printer 50 via the interface 46. In the above process, when the controller 34 receives a print-information output request from the printer 50 that has become ready to start printing, the controller 34 reads the print-information from the storage unit 40 and outputs it to the printer 50. The printer 50 prints the print-information received from the portable telephone T1 via the connection cable 48.

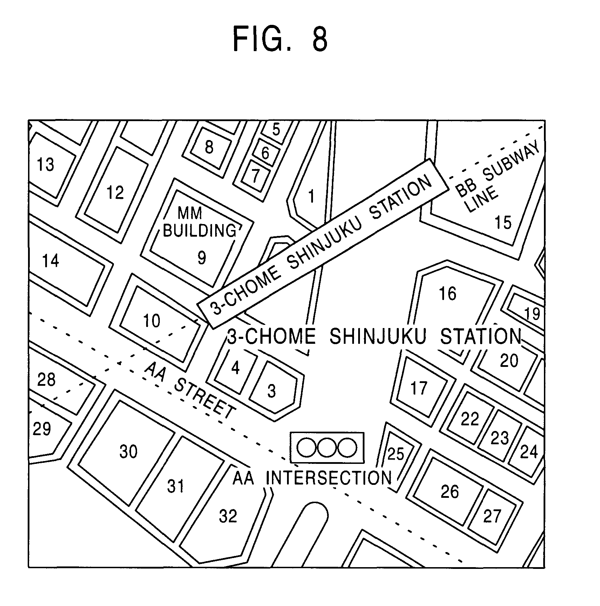

Via the process described above, the print-information selected by the user of the portable telephone T1 is printed on the specified sheet. Fig. 8 illustrates an example of print-information printed on the specified sheet.

As can be seen from Fig. 8, the print-information corresponding to the item of "3-CHOME, SHINJUKU" includes detailed information that cannot be displayed by the low-resolution display 42 of the portable telephone T1. As shown in Fig. 8, the printed information includes names of main roads, names of railroads, outlines and names of main buildings, place names, and street numbers.

After completion of printing, the controller 34 of the portable telephone T1 deletes the print-information from the storage unit 40, and the server 22B reads display-information for displaying a page of "PRINTING HAS BEEN COMPLETED" as shown in Fig. 7J from the display-information database D1 and transmits it to the portable telephone T1. On the page of "RECEPTION OF DATA HAS BEEN SUCCESSFULLY COMPLETED", a character string of "PRINTING HAS BEEN COMPLETED. THE RECEIVED DATA HAS BEEN DELETED. THANK YOUR FOR USAGE." is displayed as guidance information, and menu information including items of "9: RETURN" and "0: SERVICE TOP" is displayed.

### Fourth Example of Printing Operation

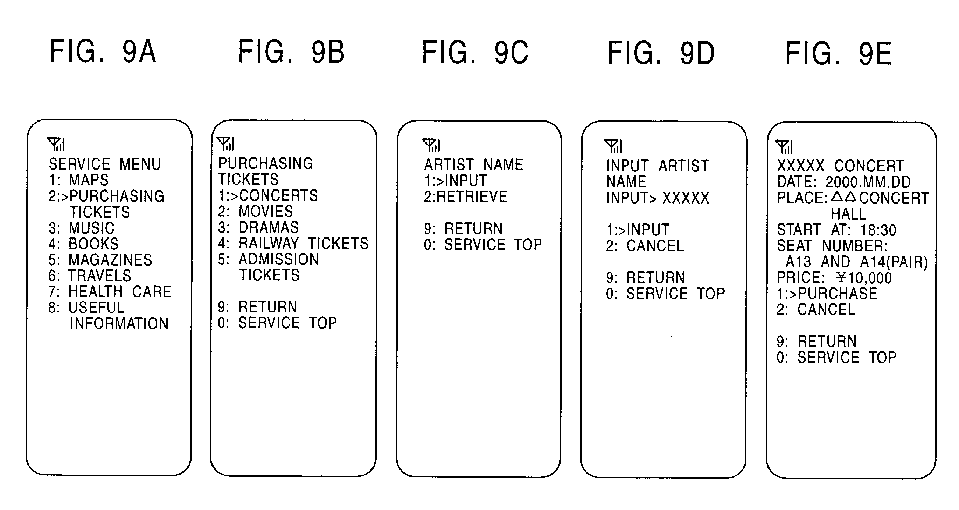

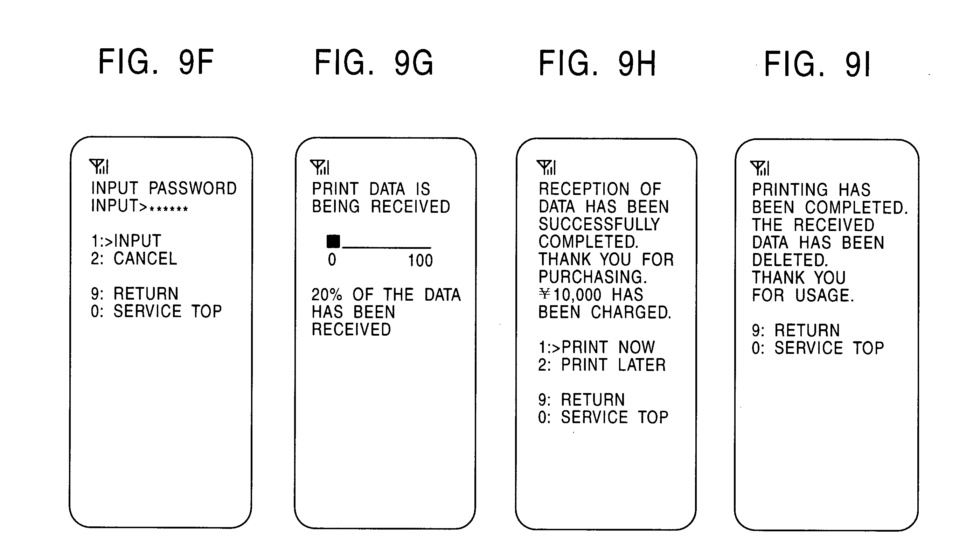

Figs. 9A to 9I illustrate a fourth example of a printing operation of the printing system according to the second embodiment of the invention, in which various kinds of information provided via the network N2 are printed on specified paper. In the present embodiment, it is assumed that after user authentication and a reservation have been made, print-information including an authentication mark is printed on specified paper.

The process in which the top page shown in Fig. 9A is displayed after the user of the portable telephone T1 gets access to the server 22B is performed in a similar manner to the third example of the operation described above. If "PURCHASING TICKETS" is selected from the items shown in Fig. 9A in a similar manner as in the third example of the operation, the server 22B transmits, via the network N2, a transmission request to the server 60 having the general-information database D5 to request the server 60 to transmits corresponding data. Upon receiving the transmission request, the server apparatus 62 reads general-information including plural pieces of display-information that are also used as print-information from the general-information database D5 and transmits outline information associated with the general-information to the server 22B.

If the server 22B receives the general-information, the server apparatus 22B converts the general-information into display-information in the specialized format such as image information adapted to the capability of the display (for example, capable of displaying a color image with a resolution of 150 by 150 pixels) of the portable telephone T1 or T2 or character information (consisting of, for example, 3000 characters or a smaller number of characters) according to the communication standard of the line network N1, and the server apparatus 22B transmits the resultant display-information to the portable telephone T1.

As a result, the display-information is displayed on the display device 42, for example, as shown in Fig. 9B.

Thereafter, for example, "CONCERTS" is selected from the items shown in Fig. 9B in a similar manner to the third example of the operation, "XXXXX" is input as a "ARTIST NAME" as shown in Figs. 9C and 9D, and the date/time and the seat are selected or input via a selection page (not shown). In response, the server 22B reads display-information for displaying a "PURCHASE" selection confirmation page such as that shown in Fig. 9E and transmits it to the portable telephone T1.

This page, corresponding to the "PURCHASE" selection confirmation page shown in Fig. 7G, is used to confirm selections of items associated with purchasing of a ticket. On this page, is displayed guidance information in the form of a character string including artist/concert name data " XXXXX CONCERT", date/time and place data "DATE: 2000.MM.DD", "PLACE: ΔΔ CONCERT HALL", "START AT: 18:30", seat data "SEAT NUMBER: A13 AND A14 (PAIR)", and price data "PRICE: ¥10,000". Also, is displayed conformation menu information including items of "1: PURCHASE", "2: CANCEL", "9: RETURN", and "0: SERVICE TOP".

Also in Figs. 9A to 9E illustrating examples of pages, as in the third example of the operation described above with reference to Fig. 7, guidance information is displayed at the tope of the page, and a menu information including items and selection numbers corresponding to the items is displayed below the guidance information.

If the decision button is pressed after moving the cursor ">" to "1: PURCHASE", which is one of the items displayed, by operating the user control unit 44, the selection unit 36 transmits, via the transmission unit 32, a transmission request signal to the server 22B to request the server 22B to transmit display-information for displaying a page of "INPUT PASSWORD" used to input a password that is required for authentication before purchasing the ticket. In response to the transmission request signal, the server 22B transmits display-information for displaying the page of "INPUT PASSWORD" shown in Fig. 9F.

On the page of "INPUT PASSWORD", a character string "INPUT PASSWORD" and a character string "INPUT" are displayed as guidance information. Furthermore, menu information including items of "1: INPUT", "2: CANCEL", "9: RETURN", and "0: SERVICE TOP" is displayed to prompt the user of the portable telephone T1 to confirm the selection. A character string indicating a pre-assigned password "******" is then input via the user control unit 44. Thereafter, if the cursor ">" is moved to "1: INPUT" as shown in Fig. 9F and the decision button is pressed, then the selection unit 36 transmits, via the transmission unit 32, a transmission request signal to the server 22B to request the server 22B to transmit print-information corresponding to the password "******" and the item of "XXXXX CONCERT".

Upon receiving the transmission request signal, the server 22B transmits an authentication request to the ID-information database D4 to inquire as to the authentication information, including the password "******", of the user of the portable telephone T1. If and only if the response of the ID-information database D4 indicates that the password "******" is identical to a pre-registered password, the server 22B further transmits an authentication request to inquire as to the authentication information of the user of the portable telephone T1. If and only if the server 22B receives permission information indicating that it is possible to charge the user of the portable telephone T1 for the fee, the server 22B transmits a transmission request to the server 62 to request the server 62 to read, from the general-information database D5, general-information corresponding to the items of " XXXXX CONCERT", "DATE: 2000.MM.DD", "PLACE: ΔΔ CONCERT HALL", "START AT: 18:30", and "SEAT NUMBER: A13 AND A14 (PAIR)", and to transmit the read general-information. In this case, the server 22B also transmits a charge request to the payment center 29 to request the payment center 29 to charge the user of the portable telephone T1.

Furthermore, the serve 22B transmits a message to the server 62 to inform that the charge request associated with the user of the portable telephone T1 has been transmitted to the payment center 29, and the server 22B also transmits an update request to the server 62 to request the server 62 to update the concert reservation information stored in the general-information database D5 so as to indicate that the user of the portable telephone T1 has made a reservation.

If the server 22B receives from the server 62 the general-information corresponding to the items of " XXXXX CONCERT", "DATE: 2000.MM.DD", "PLACE: ΔΔ CONCERT HALL", "START AT: 18:30", and "SEAT NUMBER: A13 AND A14 (PAIR)", the server 22B converts the received general-information into the print-information format and transmits the resultant information to the portable telephone T1. The print-information includes hologram seal information in addition to an authentication mark in the form of a two-dimensional bar code indicating that the user (caller) of the portable telephone T1 is authenticated as an authorized user.

The hologram seal is a ribbon-shaped printed hologram that can be transferred to a printed material. However, because the hologram includes a fine pattern with a small size close to the wavelength of light, it is very difficult to make a copy of the hologram using an ordinal optical copying machine (color copying machine). Therefore, use of the hologram seal makes it possible to prevent a printed material from being forged and thus high security can be achieved.

Furthermore, the server 22B transmits display-information for displaying a page of ""PRINT DATA IS BEING RECEIVED" as shown in Fig. 9G to the portable telephone T1. On the page of "PRINT DATA IS BEING RECEIVED", a character string of "20% OF THE DATA HAS BEEN RECEIVED" is displayed to indicate the progress, in percent, of the operation of receiving the necessary print-information having a greater data size than display-information. An indicator in the form of "■ " is also displayed to graphically indicate the relative progress of the operation of receiving the data. Herein, the length of " " indicates the relative amount of remaining data being received, and the length of "■" indicates the relative amount of data that has been received.

The controller 34 of the portable telephone T1 stores the print-information received via the interface 46 into the storage unit 40.

Upon receiving the charge request, the payment center 29 performs a predetermined process on charge data associated with the user of the portable telephone T1, in accordance with the charge request.

If the transmission of the print-information from the server 22B to the portable telephone T1 is completed, the server 22B reads display-information for displaying a page of "RECEPTION OF DATA HAS BEEN SUCCESSFULLY COMPLETED" as shown in Fig. 9H from the display-information database D1 and transmits it to the portable telephone T1. On the page of "RECEPTION OF DATA HAS BEEN SUCCESSFULLY COMPLETED", a character string of "RECEPTION OF DATA HAS BEEN SUCCESSFULLY COMPLETED. THANK YOU FOR PURCHASING. ¥10,000 HAS BEEN CHARGED." is displayed as guidance information, and confirmation menu information including items of, for example, "1: PRINT NOW", "2: PRINT LATER", "9: RETURN", and "0: SERVICE TOP" is displayed.

In this situation, if the user of the portable telephone T1 moves the cursor ">" to "1: PRINT NOW" by operating the user control unit 44 and presses the decision button, the controller 34 outputs the received print-information to the printer 50 via the interface 46. In the above process, when the controller 34 receives a print-information output request from the printer 50 that has become ready to start printing, the controller 34 reads the print-information from the storage unit 40 and outputs it to the printer 50. The printer 50 prints the print-information received from the portable telephone T1 via the connection cable 48.

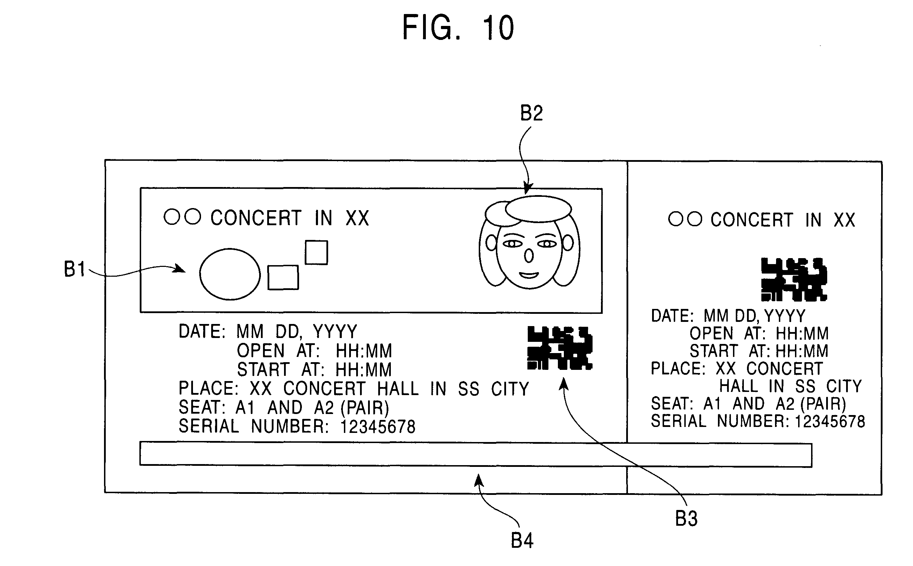

Via the process described above, the print-information selected by the user of the portable telephone T1 is printed on the specified sheet. Fig. 10 illustrates an example of print-information printed on the specified sheet.

As shown in Fig. 10, this print-information is printed so as to include the items of " XXXXX CONCERT", "DATE: 2000.MM.DD", "PLACE: ΔΔ CONCERT HALL", "START AT: 18:30", and "SEAT NUMBER: A13 AND A14 (PAIR)". In addition to these items, which are also displayed on the display 42 of the portable telephone T1, the print-information may further include a design B1 produced by a sponsor or the like and a photograph B2 of the artist. Furthermore, as shown in Fig. 10, the print-information includes a hologram seal B4 and a two-dimensional bar code B3 indicating that the caller is an authorized user whose authentication/permission information has been received.

After completion of printing, the controller 34 of the portable telephone T1 deletes the print-information from the storage unit 40, and the server 22B reads display-information for displaying a page of "PRINTING HAS BEEN COMPLETED" as shown in Fig. 9I from the display-information database D1 and transmits it to the portable telephone T1. On the page of "PRINTING HAS BEEN COMPLETED", a character string of "PRINTING HAS BEEN COMPLETED. THE RECEIVED DATA HAS BEEN DELETED. THANK YOUR FOR USAGE." is displayed as guidance information, and menu information including items of "9: RETURN" and "0: SERVICE TOP" is displayed.

### Fifth Example of Printing Operation

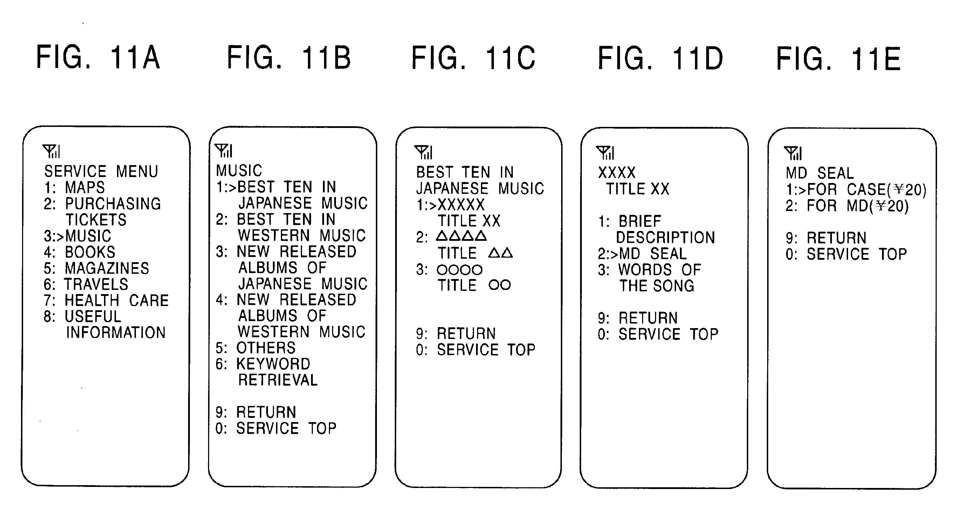

Figs. 11A to 11J illustrate a fifth example of a printing operation of the printing system according to the second embodiment of the invention, in which various kinds of information provided via the network N2 are printed on specified paper. In the present embodiment, it is assumed that printing is performed on specified paper in the form of a MD (registered trade mark) seal in accordance with print-information including layout information specifying the printing layout.

The process in which the top page shown in Fig. 11A is displayed after the user of the portable telephone T1 gets access to the server 22B is performed in a similar manner to the third or fourth example of the operation described above. If "MUSIC" is selected from the items shown in Fig. 11A in a similar manner as in the third or fourth example of the operation described above, the server 22B transmits, via the network N2, a transmission request to the server 20A having the display-information database D1, the print-information database D2, and the layout-information database D3 to request the server 20A to transmit corresponding information. Upon receiving the transmission request, the server apparatus 22A reads plural piece of display-information from the display-information database D1 and transmits outline information associated with the read display-information to the server 22B.

If the server 22B receives the display-information, the server 22B transmits the received display information to the portable telephone T1. As a result, the display-information is displayed on the display device 42, for example, as shown in Fig. 11B.

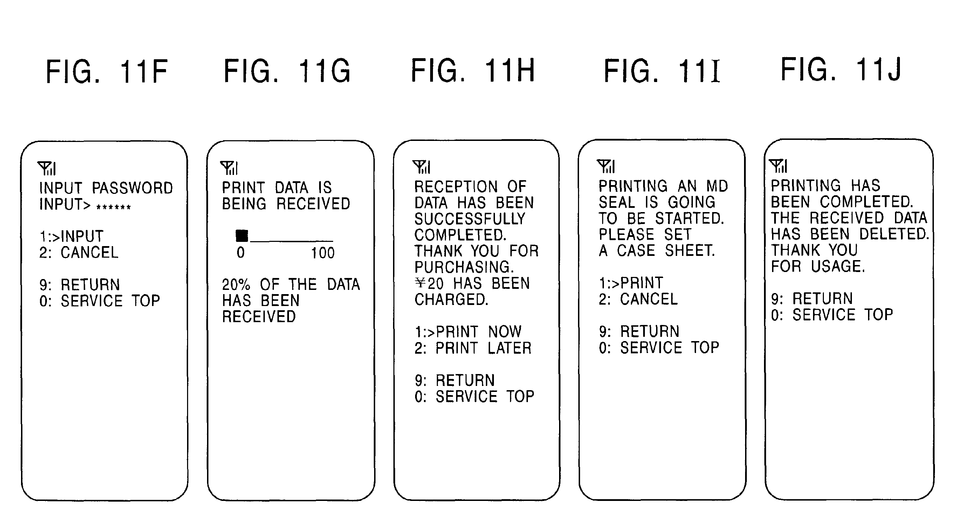

Thereafter, for example, "BEST TEN IN JAPANESE MUSIC" is selected from the items shown in Fig. 11B in a similar manner to the third or fourth example of the operation. Then, in a page shown in Fig. 11C, for example, an item with a selection number of 1 including an artist name of "XXXXX" and a title of "TITLE XX" is selected as "MUSIC CONTENT NAME". In response, a request for corresponding information is transmitted to the server 22B. The server 22B requests the server 22A to transmits the requested information. In response, the server 22A reads, from the display-information database D2, display-information for displaying a page used to specify a content as shown in Fig. 11D and transmits the read display-information to the portable telephone T1. In the example shown in Fig. 11D, a character string of "XXXXX" indicating the artist name and a character string of "TITLE XX" are displayed as guidance information, menu information including items of "1: BRIEF DESCRIPTION", "2: MD SEAL", "3: WORDS OF THE SONG", "9: RETURN", and "SERVICE TOP" is displayed. Herein, "BRIEF DESCRIPTION" presents a description, in a simple fashion, of an artist, an album, or a single. "BRIEF DESCRIPTION" may include special information about, for example, a premium that can be provided only by the system according to the present embodiment of the invention, thereby making a site very attractive and popular and promoting sales.

If the decision button is pressed after moving the cursor ">" to "2: MD SEAL", which is one of the items displayed, by operating the user control unit 44, then the server 22A, in response to a transmission request issued by the server 22B, reads from the display-information database D1 display-information for displaying a "PURCHASE" selection confirmation page such as that shown in Fig. 11E and transmits the read display-information to the portable telephone T1.

This page, corresponding to the "PURCHASE" selection confirmation page shown in Fig. 7G, is used to confirm the selection of an item to be printed. On this page, a character string of "MD SEAL" is displayed as guidance information, and confirmation menu information including items of "1: FOR CASE (¥20)", "2: FOR MD (¥20)", "9: RETURN", and "0: SERVICE TOP" is displayed.

Also in Figs. 11A to 11E illustrating examples of pages, as in the third and fourth examples of the operation described above with reference to Figs. 7 and 9, guidance information is displayed at the tope of the page, and a menu information including items and selection numbers corresponding to the items is displayed below the guidance information.

If the decision button is pressed after moving the cursor ">" to "1: FOR CASE (¥20)", which is one of the items displayed, by operating the user control unit 44, the selection unit 36 transmits, via the transmission unit 32, a transmission request signal to the server 22B to request the server 22B to transmit display-information for displaying a page of "INPUT PASSWORD" used to input a password that is required for authentication. In response to the transmission request signal, the server 22B transmits display-information for displaying the page of "INPUT PASSWORD" shown in Fig. 11F.

On the page of "INPUT PASSWORD", a character string "INPUT PASSWORD" and a character string "INPUT" are displayed as guidance information. Furthermore, menu information including items of "1: INPUT", "2: CANCEL", "9: RETURN", and "0: SERVICE TOP" is displayed to prompt the user of the portable telephone T1 to confirm the selection. A character string indicating a pre-assigned password "******" is then input via the user control unit 44. Thereafter, if the cursor ">" is moved to "1: INPUT" as shown in Fig. 11F and the decision button is pressed, then the selection unit 36 transmits, via the transmission unit 32, a transmission request signal to the server 22B to request the server 22B to transmit print-information corresponding to the password "******" and the item of "XXXXX CONCERT".

Upon receiving the transmission request signal, the server 22B transmits an authentication request to the ID-information database D4 to inquire as to the authentication information, including the password "******", of the user of the portable telephone T1. If and only if the ID-information database D4 returns a response indicating that the password "******" is identical to a pre-registered password, and furthermore if and only if permission information received via the authentication of the user of the portable telephone T1 indicates that the user of the portable telephone T1 can make a payment for the fee, the server 22B requests the server 22A to read, from the print-information database D2, print-information corresponding to the items of "XXXXX", "MD SEAL", and "FOR CASE (¥20)" and to transmits the read print-information to the portable telephone T1. In this case, the server 22B also transmits a charge request to the payment center 29 to request the payment center 29 to charge the user of the portable telephone T1.

The server 22B transmits the print-information corresponding to the items of "XXXXX", "MD SEAL", and "FOR CASE (¥20)" to the portable telephone T1. Furthermore, the server 22B transmits information-information for displaying a page of ""PRINT DATA IS BEING RECEIVED" as shown in Fig. 11G to the portable telephone T1. On the page of "PRINT DATA IS BEING RECEIVED", a character string of "20% OF THE DATA HAS BEEN RECEIVED" is displayed to indicate the progress, in percent, of the operation of receiving the necessary print-information having a greater data size than display-information. An indicator in the form of "■ " is also displayed to graphically indicate the relative progress of the operation of receiving the data. Herein, the length of " " indicates the relative amount of remaining data being received, and the length of "■" indicates the relative amount of data that has been received.

The controller 34 of the portable telephone T1 stores the print-information received via the interface 46 into the storage unit 40.

Upon receiving the charge request, the payment center 29 performs a predetermined process on charge data associated with the user of the portable telephone T1, in accordance with the charge request.

If the transmission of the print-information from the server 22A to the portable telephone T1 is completed, the server 22A reads display-information for displaying a page of "RECEPTION OF DATA HAS BEEN SUCCESSFULLY COMPLETED" as shown in Fig. 11H from the display-information database D1 and transmits it to the portable telephone T1. On the page of "RECEPTION OF DATA HAS BEEN SUCCESSFULLY COMPLETED", a character string of "RECEPTION OF DATA HAS BEEN SUCCESSFULLY COMPLETED. THANK YOU FOR PURCHASING. ¥20 HAS BEEN CHARGED." is displayed as guidance information, and confirmation menu information including items of, for example, "1: PRINT NOW", "2: PRINT LATER", "9: RETURN", and "0: SERVICE TOP" is displayed.

In this situation, if "PRINT NOW" is selected, display-information for displaying a page used to start printing, as shown in Fig. 11I, is read from the display-information database D1 and transmitted to the portable telephone T1. On this page, a character string of "PRINTING AN MD SEAL IS GOING TO BE STARTED. PLEASE SET A CASE SHEET." is displayed as guidance information, and confirmation menu information including items of "1: PRINT", "2: CANCEL", "9: RETURN", and "0: SERVICE TOP" is displayed.

If the user of the portable telephone T1 moves the cursor C to "1: PRINT" by operating the user control unit 44 and presses the decision button, the controller 34 outputs the received print-information to the printer 50 via the interface 46. The controller 34 confirms that specified paper for a MD case has been set, and, when the controller 34 receives a print-information output request from the printer 50 that has become ready to start printing, the controller 34 reads the print-information from the storage unit 40 and outputs it to the printer 50. The printer 50 prints the print-information received from the portable telephone T1 via the connection cable 48.

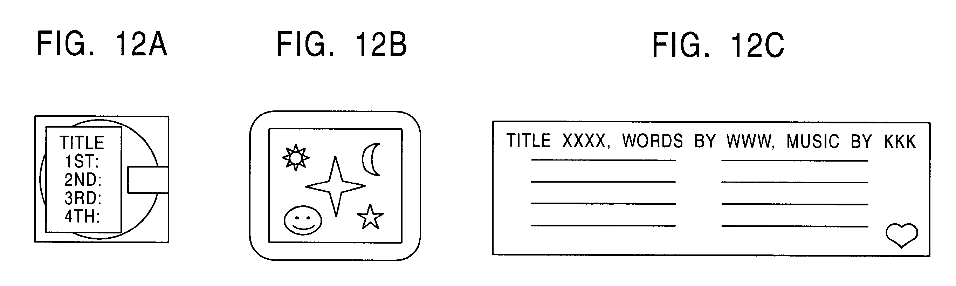

Via the process described above, the print-information selected by the user of the portable telephone T1 is printed on the specified sheet. Figs. 12A to 12C illustrate examples of print-information printed on the specified paper, wherein Fig. 12A illustrates a printed MD seal, Fig. 12B illustrates a printed MD seal for case, and Fig. 12C illustrates a printed words-of-song card.

As shown in Fig. 12, this printed print-information includes the items of "XXXXX", "MD SEAL", and "FOR CASE (¥20)". In addition to the above items, which are also displayed on the display 42 of the portable telephone T1, the printed information further includes a jacket design that is not displayed on the display 42. Thus, it is possible to obtain a seal having such a jacket design for use as a seal stuck to the surface of a MD case. Herein, it is possible to print the print-information in a proper area of paper having a size corresponding to the size of the MD case.

In the case where "3: WORDS OF THE SONG" is selected from the items shown in Fig. 11D, words-of-song information that is not contained in the display-information can be printed as shown in Fig. 12C. On the other hand, if "2: FOR MD (¥20)" is selected from the items shown in Fig. 11E, information including a title and a playback time that is not included in the information-information can be printed as shown in Fig. 12A. The print-information is printed in a specified form corresponding to selected paper so that the print-information is printed within an area corresponding to the size of a seal to be stuck to the surface of a MD as is the case in "FOR MD" or within an area corresponding to a size that can be placed into a MD case after being folded once or twice as in the case in "WORDS OF SONG".

After completion of printing, the controller 34 of the portable telephone T1 deletes the print-information from the storage unit 40, display-information for displaying a page of "PRINTING HAS BEEN COMPLETED" as shown in Fig. 11J is transmitted from the display-information database D1 to the portable telephone T1. On the page of "PRINTING HAS BEEN COMPLETED", a character string of "PRINTING HAS BEEN COMPLETED. THE RECEIVED DATA HAS BEEN DELETED. THANK YOUR FOR USAGE." is displayed as guidance information, and menu information including items of "9: RETURN" and "0: SERVICE TOP" is displayed.

The present embodiment provides advantages similar to those achieved by the first embodiment. In addition, the authentication mark included in the print-information printed by the printer 50 makes it possible to authenticate a caller on the basis of authentication information provided by a financial institution or the like serving as payment confirmation means such as the payment center 29 having information about a charge, a payment, a transfer of money or the like. The authentication mark can also be used to determine that the user of the portable telephone T1 has made an application. Thus, a sheet on which an authentication mark is printed can be used as, for example, a concert ticket.

In the present embodiment, the display-information may be music/video content information, the paper may be a MD (storage medium) label, and the print-information may be MD label data. Thus, in response to downloading music data into a storage medium, it is possible to receive print data and print it on a specified sheet that can be stuck to a case of the storage medium thereby forming, for example, a jacket design on the sheet.

In the present embodiment, the music/video content information may be one of an artist name, a title of music, a title of an album, and a playback time, thereby providing jacket information including information corresponding to a downloaded audio visual content. The print-information may be words-of-song information, thereby providing jacket information including information corresponding to a downloaded audiovisual content.

Not that the present invention is not limited to specific embodiments described above. For example, a storage medium of a type other than a MD may also be employed. More specifically, a memory stick, a VTR, or DVD (registered trade mark) may be used.

In the present invention, the server or the database serving as the authentication means may include data indicating a count. A predetermined initial count value associated with the pre-registered user (caller) of the portable telephone T1 is set in response to making an application. The count value is increased or reduced in response to a request issued by the caller, and print-information having a content similar to, for example, a membership card or a point card having the above count value or similar to a coupon or a coupon ticket is transmitted to the portable telephone T1. Furthermore, information indicating the count value that is increased or reduced depending upon the status of usage or payment in response to an action of the caller is stored. For example, when a payment, an application, or the like is made, an initial count value is set, and thereafter the count value is increased or reduced in response of each usage by an amount predetermined by the caller or the owner of the server apparatus. This makes it possible to count a service point or count the number of times that a travel coupon or a coupon ticket has been used. Furthermore, this can be used to make a reservation of a medical examination or treatment at a specified date/time.

In the present invention, the count value stored in the server of the database serving as the authentication means is increased or reduced by the request conformation means (a server or a database) for confirming that the user (caller) of the portable telephone T1 has issued a predetermined particular request in response to a request issued by another pre-registered caller such as a retail store. For example, an initial count value is set depending upon the amount of payment made by a caller or depending upon the status of an application made by the caller. Thereafter, the count value is increased or reduced in response of each usage by an amount predetermined by a retailer or the owner of the server apparatus in accordance with a notification presented by the caller. This makes it possible to count a service point at a retail shop or count the number of times that a coupon or a coupon ticket has been used.

In the present invention, the print-information may be stored, in a compressed form specially adapted to the print-information, in the storage means. Print-information generally has a greater data size than display-information. Therefore, if print-information is stored, in the same format as that of display-information, into the server apparatus, a great storage space is needed. Compression into the specialized format allows a reduction in a storage space needed to store the print-information.

In the present invention, the display-information may be magazine article outline information, and the print-information may be a whole magazine article. This makes it possible to distribute a content of a casual magazine such as a weekly magazine. In particular, it is possible to distribute a content including an image such as a photograph in a similar fashion to a weekly pictorial magazine.

In the present invention, the print-information may be a novel to be transmitted, and the display-information may be a title and an author name. This makes it possible to realize an on-line newspaper or weekly magazine including a serial novel whose content can be easily obtained simply by specifying a title or an author. This is much more convenient for users compared with a case where one visits a bookshop, selects a desired book, and makes a payment.

The technique according to the present invention, in which, in response to a payment or an application being made, print-information is permitted to be transmitted when a caller is authenticated by the authentication means or the request confirmation means, may have other various applications. Some examples are listed below.
Distribution of map information in conjunction with GPS or PHS position information service
Distribution of a coupon with a discount ticket attached
Distribution of a special photograph or information about a special event that is provided only to members of a fan club
Distribution of a TV or radio program table of a particular genre specified by an user
Distribution of information about fashion associated with hairstyle, makeup, or cosmetic technique specified by an user
Distribution of puzzles such as a crossword puzzle or quizzes of a particular genre specified by an user
Distribution of various kinds of fortune-telling information depending upon personal information
Distribution of paper charms in conjunction with the fortune-telling information
Distribution of information about shopping, including for example information indicating difference in price of popular goods among shops or information such as a stock list
Distribution of various membership cards
Distribution of cards such as a character card at a premium
Transmission of information indicating the result of a medical examination performed by a medical institution
Transmission of a clinical history needed for first aid
Distribution of a recipe for a special menu for a diet or a special menu with restricted foodstuff for a person having an illness such as diabetes or atopy
Distribution of disaster prevention information provided when a meteorological warning is issued
Distribution of a timetable of a particular public transportation
Distribution of stock price information in the form of a detailed graph
Transmission of a prepaid card used as electronic money
Transmission of a list of insurance
Distribution of a collection of illustrative sentences for use in speech or letters
Transmission of an electronic business card (a business card of an individual is printed when at a place where he/she visits, or a business card of a particular person is printed in order to introduce him/her to another person)
Transmission of a calendar to a place where a person visits in accordance with a predetermined business schedule
Distribution of a predetermined on-line telephone book
Distribution of information about skill training, such as a one-point English lesson

In the present invention, print-information may include advertisement information that is printed in a particular area. In this case, the amount of fee for reception of print-information may be reduced depending on the area in which advertisement information is printed or depending on the number of advertisements.

As can be understood from the above description, the printing system according to the present invention has the great advantages as described below.
(1) The present invention provides a printing system comprising a server apparatus, a portable terminal for receiving information transmitted from the server apparatus, and a printer connected to the portable terminal, for printing on specified paper, wherein the server apparatus includes storage means for storing display-information to be displayed on a display of the portable terminal and print-information, to be printed on the specified paper, including information that is more detailed than corresponding display-information, and wherein the portable terminal includes display means for displaying the display-information stored in the server apparatus and printing means for printing the print-information by the printer. Thus, in this printing system in which the server apparatus stores both display-information to be displayed on the display of the portable terminal and print-information including information that is more detailed than corresponding display-information, printing is performed on specified paper not in accordance with the display-information for being displayed on the display of the portable terminal but in accordance with the print-information that is adapted to the size of the specified paper and that includes information that is more detailed than corresponding display-information, thereby allowing the detailed information to be printed within the size of the specified paper.
(2) The present invention also provides a printing system comprising a server apparatus, a portable terminal for receiving information transmitted from the server apparatus, and a printer connected to the portable terminal, for printing on specified paper, wherein the server apparatus has a capability of converting a format of general information provided via a network into a specialized format adapted to print-information to be printed by the printer, and wherein the portable terminal includes printing means for printing, by the printer, the print-information in the specialized format received from the server apparatus. That is, information to be used as print-information including detailed information is stored in the server apparatus, and, when printing is performed on specified paper, print-information is produced, in response to a transmission request issued by a portable terminal, into a format that matches with the size of the specified paper. Unlike the display-information that cannot be displayed with a high resolution, the print-information may include detailed information. Thus, it is possible to print detailed information using the print-information.
(3) The print-information may be stored, in a compressed form specially adapted to the print-information, in the storage means. Print-information generally has a greater data size than display-information. Therefore, if print-information is stored, in the same format as that of display-information, into the server apparatus, a great storage space is needed. Compression into the specialized format allows a reduction in a storage space needed to store the print-information.
(4) The print-information may include information described in a specialized script language thereby making it possible to print the print-information as fast as possible although the portable terminals T1 and T2 are low in processing speed and have a low capacity of memory space compared with a typical home-use personal computer and thus the portable terminals T1 and T2 have limitations in terms of installed software.
(5) The print-information corresponds to the display-information, and the printing means includes selection means for selecting print-information, to be printed by the printer, from print-information stored in the storage means. This makes it possible for the print-information to include plural versions of information so that a particular version of print-information is transmitted depending upon the type of print-information displayed on the display thereby allowing only necessary print-information to be printed on the specified paper in accordance with the selection of print-information made by the selection means.
(6) Preferably, the display-information is outline-information indicating an outline of the print-information, and the printing means includes designation means for designating at least one piece of print-information to be printed by the printer, on the basis of outline information displayed on the display, and the printing means prints the printing-information designated by the designation means on the basis of the outline information, using the printer. That is, in this printing system, when the outline of print-information is displayed on the portable terminal, a desired print-information to be printed on the specified paper can be designated by the designation means. This allows the user of the portable terminal to easily view information and to easily select information to be printed.
(7) Preferably, the storage means stores information indicating a predetermined size of the specified paper and also stores arrangement information indicating the arrangement of the printing-information to be printed on the specified paper, and the printing means arranges, in accordance with the arrangement information, the print-information designated by the designation means on the basis of the outline information. Thus, when one or more pieces of print-information selected by the user of the portable telephone are printed, the print-information is automatically arranged in accordance with the arrangement information and the arranged print-information is printed on the specified paper, thereby preventing the print-information from extending out of the paper.
(8) Preferably, the server apparatus includes authentication means storing authentication information for identifying a pre-registered caller, and the server apparatus identifies a caller by retrieving the authentication information in response to a request issued by the portable terminal, and only when the authentication of the caller on the basis of the authentication information has been successfully passed, the server apparatus transmits the print-information from the storage means to the portable terminal. A caller can be identified by the authentication means on the basis of pre-registered identification number or the like. Furthermore, a caller can be identified on the basis of authentication information provided by a financial institution or the like having information about an account or a payment of the caller, or on the basis of authentication information including a record of an application or a reservation. This makes it possible to transmit print-information only to particular authorized users.
(9) The print-information may include an authentication mark in the form of a two- or one-dimensional bar code indicating that the caller is an authorized user. If the authentication mark is printed using the printing means, it becomes possible to determine that a caller is an authorized user, on the basis of authentication information provided by a financial institution or the like having information about an account or a payment of the caller, or on the basis of authentication information including a record of an application or a reservation. That is, it is possible to authenticate a particular user on the basis of the authentication mark printed on paper.
(10) Preferably, the authentication means includes payment confirmation means for confirming that a pre-registered caller has made a payment, and, in response to permission information indicating that the payment confirmation means has confirmed that the payment has made, the storage means transmits the print-information to the portable terminal. This makes it possible to permit print-information to be transmitted only when a payment has been made.
(11) The display-information may be music/video content information, the paper may be a storage medium label, and the print-information may be storage medium label data. The storage medium may be one of a magnetooptical disk, a memory card, a videotape, an audiotape, and an optical disk. Thus, in response to downloading data into a storage medium, it is possible to receive print data and print it on a specified sheet that can be stuck to a case of the storage medium thereby forming, for example, a jacket design on the sheet.
(12) The music/video content information may be one of an artist name, a title of music, a title of an album, and a playback time, thereby providing jacket information including information corresponding to a downloaded audio visual content. The print-information may also be words-of-song card information thereby providing jacket information including information corresponding to a downloaded audiovisual content.
(13) The display-information may be magazine article outline information, and the print-information may be a whole magazine article. In this case, a content of a casual magazine such as a weekly magazine can be distributed. In particular, it is possible to distribute a content including an image such as a photograph in a similar fashion to a weekly pictorial magazine.

## Claims

1. A printing system comprising a server apparatus; a portable terminal for receiving information transmitted from the server apparatus; and a printer connected to the portable terminal, for printing on specified paper,
wherein the server apparatus includes storage means for storing display-information to be displayed on a display of the portable terminal and print-information, to be printed on the specified paper, including information that is more detailed than corresponding display-information,
and wherein the portable terminal includes display means for displaying the display-information stored in the server apparatus and printing means for printing the print-information by the printer.

2. A printing system comprising a server apparatus; a portable terminal for receiving information transmitted from the server apparatus; and a printer connected to the portable terminal, for printing on specified paper,
wherein the server apparatus has a capability of converting a format of general information provided via a network into a specialized format adapted to print-information to be printed by the printer,
and wherein the portable terminal includes printing means for printing, by the printer, the print-information in the specialized format received from the server apparatus.

3. A printing system according to Claim 1, wherein the print-information is stored, in a compressed form specially adapted to the print-information, in the storage means.

4. A printing system according to Claim 1, wherein the print-information includes information described in a specialized script language.

5. A printing system according to Claim 1, wherein the print-information corresponds to the display-information,
and wherein the printing means includes selection means for selecting print-information, to be printed by the printer, from print-information stored in the storage means.

6. A printing system according to Claim 1, wherein the display-information is outline-information indicating an outline of the print-information,
and wherein the printing means includes designation means for designating at least one piece of print-information to be printed by the printer, on the basis of outline information displayed on the display, and the printing means prints the printing-information designated by the designation means on the basis of the outline information, using the printer.

7. A printing system according to Claim 6, wherein the storage means stores information indicating a predetermined size of the specified paper and also stores arrangement information indicating the arrangement of the printing-information to be printed on the specified paper,
and wherein the printing means arranges, in accordance with the arrangement information, the print-information designated by the designation means on the basis of the outline information.

8. A printing system according to Claim 1, wherein the server apparatus includes authentication means storing authentication information for identifying a pre-registered caller,
and wherein the server apparatus identifies a caller by retrieving the authentication information in response to a request issued by the portable terminal, and only when the authentication of the caller on the basis of the authentication information has been successfully passed, the server apparatus transmits the print-information from the storage means to the portable terminal.

9. A printing system according to Claim 7, wherein the print-information includes an authentication mark indicating that a caller is an authorized user.

10. A printing system according to Claim 9, wherein the authentication mark is encrypted alphanumeric information described in the form of a two-dimensional or a one-dimensional bar code.

11. A printing system according to Claim 8, wherein the authentication means stores a count associated with the pre-registered caller,
and wherein the count is increased or reduced in response to a request issued by the caller, print-information corresponding to the count is transmitted to the portable terminal, and the resultant increased or reduced count is stored.

12. A printing system according to Claim 11, wherein the authentication means increases or reduces the count in response to a request issued by another pre-registered caller and stores the resultant increased or reduced count.

13. A printing system according to Claim 8, wherein the authentication means includes payment confirmation means for confirming that a pre-registered caller has made a payment,
and wherein, in response to permission information indicating that the payment confirmation means has confirmed that the payment has made, the storage means transmits the print-information to the portable terminal.

14. A printing system according to Claim 8, wherein the authentication means includes request confirmation means for confirming that a pre-registered caller has issued a predetermined particular request,
and wherein in response to permission information indicating that the request confirmation means has confirmed that the request has been issued, the storage means transmits the print-information to the portable terminal.

15. A printing system according to Claim 1, wherein the display-information is music/video content information.

16. A printing system according to Claim 15, wherein the paper is a storage medium label and the print-information is storage medium label data.

17. A printing system according to Claim 16, wherein the storage medium is one of a magnetooptical disk, a memory card, videotape, an audiotape, and an optical disk.

18. A printing system according to Claim 15, wherein the music/video content information is one of an artist name, a title of music, a title of an album, and a playback time.

19. A printing system according to Claim 15, wherein the print-information is words-of-song card information.

20. A printing system according to Claim 1, wherein the display-information is magazine article outline information, and the print-information is a whole magazine article.

21. A printing system according to Claim 1, wherein the print-information is a novel to be transmitted, and the display-information is a title and an author name.
